# EUROPEAN PATENT APPLICATION

(11) **EP 4 783 481 A1**
(43) Date of publication of application: **29.07.2026**
(21) Application number: 24867424.4
(22) Date of filing: 18.09.2024
(51) Int. Cl.: H04B 7/06

(54) **CHANNEL STATE INFORMATION FEEDBACK METHOD, AND TERMINAL AND NETWORK-SIDE DEVICE**

(30) Priority: 21.09.2023 CN 202311230225
(71) Applicant: VIVO MOBILE COMMUNICATION CO., LTD., Dongguan, Guangdong 523863 (CN)
(72) Inventor: YUAN, Jiangwei, Dongguan, Guangdong 523863 (CN); LIU, Hao, Dongguan, Guangdong 523863 (CN); SONG, Yang, Dongguan, Guangdong 523863 (CN)
(74) Representative: Murgitroyd & Company
(86) International application number: PCT/CN2024/119340
(87) International publication number: WO 2025/061016

(57) **Abstract**

The present application discloses a channel state information feedback method, a terminal, and a network-side device, pertaining to the field of wireless communication technologies. The channel state information feedback method in embodiments of the present application includes: determining, by a terminal, at least one target delay feedback associated with target multi-transmission reception point (multi-TRP, MTRP) CSI to be obtained; and obtaining and feeding back, by the terminal, the target MTRP CSI based on the at least one target delay feedback.

## Description

### CROSS-REFERENCE TO RELATED APPLICATIONS

The present application claims priority to the Chinese Patent Application No. 202311230225.1, filed to the China National Intellectual Property Administration on September 21, 2023 and entitled "CHANNEL STATE INFORMATION FEEDBACK METHOD, TERMINAL, AND NETWORK-SIDE DEVICE", which is incorporated herein by reference in its entirety.

### TECHNICAL FIELD

The present application belongs to the technical field of wireless communications, and specifically relates to a channel state information feedback method, a terminal, and a network-side device.

### BACKGROUND

Channel state information (Channel State Information, CSI) framework may be divided into downlink CSI and uplink CSI, where the downlink CSI framework includes a downlink physical channel and a downlink reference signal; and the uplink CSI framework includes an uplink physical channel and an uplink reference signal.

Typically, downlink physical channels are used for data transmission, and downlink reference signals are typically used for channel estimation to obtain downlink channel state information (CSI). Typically, uplink physical channels are used for uplink data transmission, and uplink reference signals are typically used for channel estimation to obtain uplink channel state information (CSI).

Typically, a terminal may determine a CSI report via higher-layer signaling or default rules. For example, a network-side device associates, with each CSI report configuration (CSI-ReportConfig), a reference signal resource configuration (CSI-ResourceConfig) for channel measurement, a reference signal resource configuration for CSI interference measurement (CSI Interference Measurement, CSI-IM), or a reference signal resource configuration for a non-zero power CSI reference signal (Non-Zero Power CSI-RS) resource. The terminal obtains corresponding channel information by measuring the associated reference resources in these resource configurations, then obtains corresponding CSI information according to the codebook configuration information and CSI report content associated with the CSI report configuration, and feeds back the corresponding CSI information based on the uplink channel.

However, in the related art, for joint transmission between multiple transmission reception points (Transmission Reception Point, TRP), the coherent joint transmission (coherent joint transmission, CJT) CSI obtained by the terminal has a limited range of feedbackable delay offset between two TRPs, which cannot guarantee the performance of the CSI obtained by the terminal or the feedback performance of delay information between multiple TRPs.

### SUMMARY

Embodiments of the present application provide a channel state information feedback method, a terminal, and a network-side device, which can solve the problem that the performance of the CSI obtained by the terminal or the feedback performance of delay information between multiple TRPs cannot be guaranteed.

A first aspect provides a channel state information feedback method, including: determining, by a terminal, at least one target delay feedback associated with target multi-transmission reception point (multi-TRP, MTRP) CSI to be obtained; and obtaining and feeding back, by the terminal, the target MTRP CSI based on the at least one target delay feedback.

A second aspect provides a channel state information feedback method, including: determining, by a terminal, a target delay indication associated with target MTRP CSI to be obtained, where the target delay indication is associated with at least one target delay adjustment value; and obtaining and feeding back, by the terminal, the target MTRP CSI based on the target delay indication.

A third aspect provides a delay information feedback method, including: obtaining and feeding back, by a terminal, delay information between multiple TRPs based on a configuration of a network-side device; where the configuration of the network-side device includes one of the following: at least one first reference signal set, where the at least one first reference signal set is associated with multiple TRPs; multiple first reference signal sets and a first indication, where the first indication is used to indicate a target reference signal set for obtaining delay information among the multiple first reference signal sets, and the multiple first reference signal sets are associated with multiple TRPs; and one first reference signal set and a second indication, where the second indication is used to indicate a target reference signal for obtaining delay information in the first reference signal set, and the first reference signal set is associated with multiple TRPs.

A fourth aspect provides a channel state information obtaining method, including: a network-side device indicates at least one target delay feedback associated with target MTRP CSI to a terminal; the network-side device receives the target MTRP CSI fed back by the terminal.

A fifth aspect provides a channel state information obtaining method, including: sending, by a network-side device, a target delay indication corresponding to a target CSI report configuration to a terminal, where the target delay indication is associated with at least one target delay adjustment value, and the target CSI report configuration is a CSI report configuration associated with target MTRP CSI; and receiving, by the network-side device, the target MTRP CSI fed back by the terminal.

A sixth aspect provides a delay information obtaining method, including: sending, by a network-side device, configuration information to a terminal; and obtaining, by the network-side device, delay information between multiple TRPs fed back by the terminal; where the configuration information includes one of the following: at least one first reference signal set, where the at least one first reference signal set is associated with multiple TRPs; multiple first reference signal sets and a first indication, where the first indication is used to indicate a target reference signal set for obtaining delay information among the multiple first reference signal sets, and the multiple first reference signal sets are associated with multiple TRPs; and one first reference signal set and a second indication, where the second indication is used to indicate a target reference signal for obtaining delay information in the first reference signal set, and the first reference signal set is associated with multiple TRPs.

A seventh aspect provides a channel state information feedback apparatus, including: a first determining module, configured to determine at least one target delay feedback associated with target MTRP CSI to be obtained; and a first feedback module, configured to obtain and feed back the target MTRP CSI based on the at least one target delay feedback.

An eighth aspect provides a channel state information feedback apparatus, including: a second determining module, configured to determine a target delay indication associated with target MTRP CSI to be obtained, where the target delay indication is associated with at least one target delay adjustment value; and a second feedback module, configured to obtain and feed back the target MTRP CSI based on the target delay indication.

A ninth aspect provides a delay information feedback apparatus, including: a first obtaining module, configured to obtain delay information between multiple TRPs based on a configuration of a network-side device; and a third feedback module, configured to feed back the obtained delay information between the multiple TRPs; where the configuration of the network-side device includes one of the following: at least one first reference signal set, where the at least one first reference signal set is associated with multiple TRPs; multiple first reference signal sets and a first indication, where the first indication is used to indicate a target reference signal set for obtaining delay information among the multiple first reference signal sets, and the multiple first reference signal sets are associated with multiple TRPs; and one first reference signal set and a second indication, where the second indication is used to indicate a target reference signal for obtaining delay information in the first reference signal set, and the first reference signal set is associated with multiple TRPs.

A tenth aspect provides a channel state information obtaining apparatus, including: a first indication module, configured to indicate at least one target delay feedback associated with the target MTRP CSI to a terminal; and a first transceiver module, configured to receive the target MTRP CSI fed back by the terminal.

An eleventh aspect provides a channel state information obtaining apparatus, including: a second indication module, configured to send a target delay indication corresponding to a target CSI report configuration to a terminal, where the target delay indication is associated with at least one target delay adjustment value, and the target CSI report configuration is a CSI report configuration associated with target MTRP CSI; and a second transceiver module, configured to receive the target MTRP CSI fed back by the terminal.

A twelfth aspect provides a delay information obtaining apparatus, including: a third transceiver module, configured to send configuration information to a terminal; and a second obtaining module, configured to obtain delay information between multiple TRPs fed back by the terminal; where the configuration information includes one of the following: at least one first reference signal set, where the at least one first reference signal set is associated with multiple TRPs; multiple first reference signal sets and a first indication, where the first indication is used to indicate a target reference signal set for obtaining delay information among the multiple first reference signal sets, and the multiple first reference signal sets are associated with multiple TRPs; and one first reference signal set and a second indication, where the second indication is used to indicate a target reference signal for obtaining delay information in the first reference signal set, and the first reference signal set is associated with multiple TRPs.

A thirteenth aspect provides a terminal, the terminal including a processor and a memory, where the memory stores a program or instructions executable on the processor, and the program or instructions, when executed by the processor, implement the steps of the method according to the first aspect, or implement the steps of the method according to the second aspect, or implement the steps of the method according to the third aspect.

A fourteenth aspect provides a terminal, including a processor and a communication interface, where the processor is configured to implement the steps of the method according to the first aspect, or implement the steps of the method according to the second aspect, or implement the steps of the method according to the third aspect, and the communication interface is configured to be coupled with the processor.

A fifteenth aspect provides a network-side device, the network-side device including a processor and a memory, where the memory stores a program or instructions executable on the processor, and the program or instructions, when executed by the processor, implement the steps of the method according to the fourth aspect, or implement the steps of the method according to the fifth aspect, or implement the steps of the method according to the sixth aspect.

A sixteenth aspect provides a network-side device, including a processor and a communication interface, where the processor is configured to implement the steps of the method according to the fourth aspect, or implement the steps of the method according to the fifth aspect, or implement the steps of the method according to the sixth aspect, and the communication interface is configured to be coupled with the processor.

A seventeenth aspect provides a readable storage medium, where the readable storage medium stores a program or instructions, and the program or instructions, when executed by a processor, implement the steps of the method according to the first aspect, or implement the steps of the method according to the second aspect, or implement the steps of the method according to the third aspect, or implement the steps of the method according to the fourth aspect, or implement the steps of the method according to the fifth aspect, or implement the steps of the method according to the sixth aspect.

An eighteenth aspect provides a wireless communication system, including: a terminal and a network-side device, where the terminal is configured to perform the steps of the method according to the first aspect, or perform the steps of the method according to the second aspect, or perform the steps of the method according to the third aspect, and the network-side device is configured to perform the steps of the method according to the fourth aspect, or perform the steps of the method according to the fifth aspect, or perform the steps of the method according to the sixth aspect.

A nineteenth aspect provides a chip, the chip including a processor and a communication interface, where the communication interface is coupled with the processor, the processor is configured to run a program or instructions to implement the steps of the method according to the first aspect, or implement the steps of the method according to the second aspect, or implement the steps of the method according to the third aspect, or implement the steps of the method according to the fourth aspect, or implement the steps of the method according to the fifth aspect, or implement the steps of the method according to the sixth aspect.

A twentieth aspect provides a computer program/program product, where the computer program/program product is stored in a storage medium, and the program/program product is executed by at least one processor to implement the steps of the method according to the first aspect, or implement the steps of the method according to the second aspect, or implement the steps of the method according to the third aspect, or implement the steps of the method according to the fourth aspect, or implement the steps of the method according to the fifth aspect, or implement the steps of the method according to the sixth aspect.

In a scheme provided in the embodiments of the present application, before obtaining target MTRP CSI, a terminal determines at least one target delay feedback associated with the target MTRP CSI or an associated target delay indication, and then obtains and feeds back the target MTRP CSI according to the at least one target delay feedback or at least one target delay adjustment value associated with the target delay indication, so that feedback of MTRP CSI can be achieved when delay feedback has been performed, thereby guaranteeing the feedback performance of CSI. In another scheme provided in the embodiments of the present application, the terminal can obtain and feed back delay information between multiple TRPs based on a configuration of a network-side device, thereby achieving delay feedback between multiple TRPs and guaranteeing the feedback performance of delay information between TRPs.

### BRIEF DESCRIPTION OF THE DRAWINGS

FIG. 1 is a block diagram of a wireless communication system to which embodiments of the present application are applicable;
FIG. 2 is a schematic flowchart of a channel state information feedback method according to an embodiment of the present application;
FIG. 3 is another schematic flowchart of a channel state information feedback method according to an embodiment of the present application;
FIG. 4 is a schematic flowchart of a delay information feedback method according to an embodiment of the present application;
FIG. 5 is a schematic flowchart of a channel state information obtaining method according to an embodiment of the present application;
FIG. 6 is another schematic flowchart of a channel state information obtaining method according to an embodiment of the present application;
FIG. 7 is a schematic flowchart of a delay information obtaining method according to an embodiment of the present application;
FIG. 8 is a schematic structural diagram of a channel state information feedback apparatus according to an embodiment of the present application;
FIG. 9 is another schematic structural diagram of a channel state information feedback apparatus according to an embodiment of the present application;
FIG. 10 is a schematic structural diagram of a delay information feedback apparatus according to an embodiment of the present application;
FIG. 11 is a schematic structural diagram of a channel state information obtaining apparatus according to an embodiment of the present application;
FIG. 12 is another schematic structural diagram of a channel state information obtaining apparatus according to an embodiment of the present application;
FIG. 13 is a schematic structural diagram of a delay information obtaining apparatus according to an embodiment of the present application;
FIG. 14 is a schematic structural diagram of a communications device according to an embodiment of the present application;
FIG. 15 is a schematic structural diagram of hardware of a terminal according to an embodiment of the present application; and
FIG. 16 is a schematic structural diagram of hardware of a network-side device according to an embodiment of the present application.

### DETAILED DESCRIPTION

The following clearly describes the technical solutions in the embodiments of the present application with reference to the accompanying drawings in the embodiments of the present application. Apparently, the described embodiments are merely some rather than all of the embodiments of the present application. All other embodiments obtained by persons of ordinary skill in the art based on the embodiments of the present application shall fall within the protection scope of the present application.

The terms "first", "second", and the like in the present application are used to distinguish between similar objects instead of describing a specific order or sequence. It should be understood that terms used in this way are interchangeable in appropriate circumstances so that the embodiments of the present application can be implemented in other orders than the order illustrated or described herein. In addition, "first" and "second" are usually used to distinguish objects of a same type, and do not restrict a quantity of objects. For example, there may be one or a plurality of first objects. In addition, the term "or" in the present application indicates at least one of the connected objects, for example, "A or B" encompasses three scenarios: scenario one, including A but not B; scenario two, including B but not A; and scenario three, including both A and B. The character "/" generally represents an "or" relationship between the associated objects.

The term "indication" in the present application may be either a direct indication (or explicit indication) or an indirect indication (or implicit indication). The direct indication can be understood as the sender explicitly informing the receiver of specific information, operations to be performed, or request results in the sent indication; and the indirect indication can be understood as the receiver determining the corresponding information according to the indication sent by the sender, or making a judgment and determining the operations to be performed or request results according to the judgment result.

It should be noted that technologies described in the embodiments of the present application are not limited to a long term evolution (Long Term Evolution, LTE)/LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), or other systems. The terms "system" and "network" in the embodiments of the present application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6-th generation (6-th Generation, 6G) communication system.

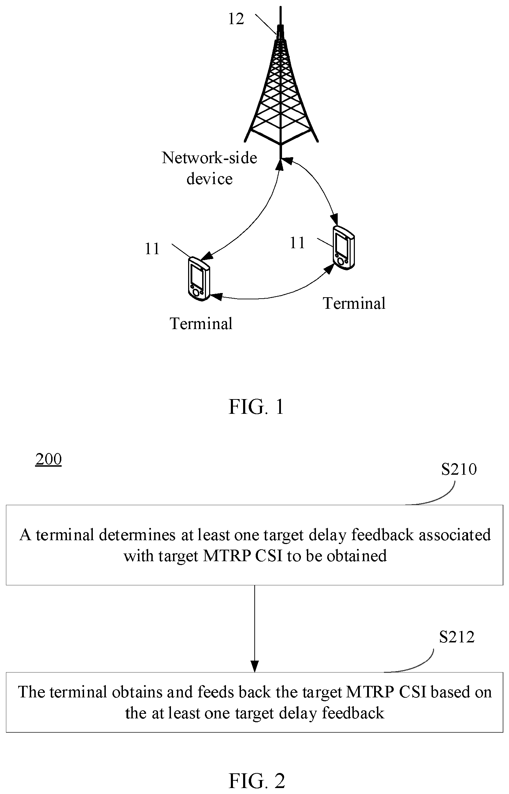

FIG. 1 is a block diagram of a wireless communication system to which the embodiments of the present application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle user equipment (Vehicle User Equipment, VUE), a ship-borne equipment, a pedestrian user equipment (Pedestrian User Equipment, PUE), a smart home (home devices with a wireless communication function, for example, a refrigerator, a television, a washing machine, or a furniture), a game console, a personal computer (Personal Computer, PC), a teller machine, or self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment may also be referred to as a vehicle terminal, a vehicle controller, a vehicle module, a vehicle component, a vehicle chip, or a vehicle unit. It should be noted that the embodiments of the present application do not impose any limitation on a specific type of the terminal 11. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home B node (home Node B, HNB), a home evolved B node (home evolved Node B), a transmission reception point (Transmission Reception Point, TRP), or other appropriate terms in the field, provided that the same technical effect is achieved. The base station is not limited to specific technical terms. It should be noted that in the embodiments of the present application, the base station in the NR system is used as an example for introduction, and the specific type of the base station is not limited.

The core network device may include but is not limited to at least one of the following: a core network node, a core network function, a mobility management entity (Mobility Management Entity, MME), an access management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of the present application are described with only the core network device in the NR system as an example, but the core network device is not limited to any specific type.

To facilitate a better understanding of the technical solutions provided in the present application, the technologies involved in the present application are first introduced.

### 1. CSI framework

Typically, the CSI framework may be divided into two parts: downlink CSI and uplink CSI. The downlink CSI framework includes downlink physical channels and downlink reference signals; and the uplink CSI framework includes uplink physical channels and uplink reference signals.

Typically, downlink physical channels are used for data transmission, and downlink reference signals are typically used for channel estimation to obtain downlink channel state information (CSI). Uplink physical channels are typically used for uplink data transmission, and uplink reference signals are typically used for channel estimation to obtain uplink channel state information (CSI).

In 5G systems, CSI is mainly used for adaptive beamforming and MIMO (Multiple Input Multiple Output) technologies to improve wireless transmission bandwidth and reliability.

Overall, the 5G CSI framework is an important technology in 5G communication systems, playing a vital role in improving wireless transmission bandwidth and reliability, as well as interference coordination.

### 2. CSI report content

Typically, a terminal may determine via higher-layer signaling or default rules that the CSI report may include one of: 'none', 'cri-ri-pmi-cqi', 'cri-RI-i1', 'cri-RI-CQI', 'cri-RSRP', 'cri-SINR', 'ssb-Index-RSRP', 'ssb-Index-SINR', or 'cri-RI-LI-PMI-CQI'.

If the terminal is configured with a CSI-ReportConfig, and the upper-layer parameter reportQuantity is set to "none", then the terminal will not report any content for the CSI-ReportConfig.

### 3. CSI obtaining

The network associates, for each CSI report configuration (CSI-ReportConfig), a reference signal resource configuration (CSI-ResourceConfig) for channel measurement, a reference signal resource configuration for interference measurement associated with CSI-IM (CSI interference measurement) resources, and/or a reference signal resource configuration for interference measurement associated with NZP-CSI RS (non-zero power CSI-RS) resources. The terminal obtains corresponding channel information by measuring the associated reference resources in these resource configurations. Currently, the corresponding channel information can typically be considered as baseband digital precoding matrix information and baseband modulation scheme recommendation information. Further, according to the codebook configuration information and report content associated with the CSI report configuration, the terminal obtains corresponding CSI information and feeds back the corresponding CSI information based on the uplink channel.

For the feedback of the precoding matrix indicator (Precoding matrix indicator, PMI) in the CSI information, if Rel-15 Type1 codebook is configured, the terminal measures at most eight reference signals for channel measurement and selects one reference signal to feed back the PMI. If it is Rel-15 Type2/Rel-16 Type2/Rel-17 codebook, the terminal measures one channel measurement reference signal and feeds back the PMI associated with the reference signal. If it is Rel-18 Type2 coherent joint transmission (coherent joint transmission, CJT) codebook, the terminal measures at most four channel measurement reference signals, assumes that the four reference signals are associated with four TRPs, and uses the channels associated with the four reference signals to obtain and feed back the PMI. If it is Rel-18 Type2 predictive codebook, for periodic/semi-persistent channel measurement reference signals, the network-side device configures one reference signal, and the terminal uses multiple transmission moments of one reference signal to obtain the predicted PMI; for aperiodic channel measurement reference signals, the network-side device configures at most twelve reference signals, the twelve reference signals are sent at certain intervals in time, and the terminal uses one transmission moment of the twelve reference signals to obtain the predicted PMI.

If the obtained CSI is CJT CSI, the delay offset between two TRPs that the terminal can feed back is generally 1/B×N3, where B is the CSI reference signal bandwidth, and N3 is the number of PMI subbands, which means that if the delay offset between two TRPs exceeds this range, the performance of the PMI obtained by the terminal will degrade.

In addition, in LTE systems, since the cell reference signal (Cell Reference Signal, CRS) is sent in every subframe, CRS can be used to achieve high-precision time-frequency tracking. However, in NR, this "always-on" reference signal is removed, and reference signals for time-frequency tracking are flexibly configured according to UE requirements. This newly defined reference signal is called a tracking reference signal (Tracking Reference Signal, TRS). Typically, all channel state information reference signals (Channel State Information Reference Signal, CSI-RS) used for tracking may be called TRS, so in a certain sense, TRS may also be regarded as a type of CSI-RS.

In the NR design, TRS exists as a special CSI-RS. CSI-RS features flexible configuration and can flexibly increase the time-frequency density of reference signals. When CSI-RS is transmitted in single-port form, it operates in TRS mode. TRS is mainly used for timing estimation, delay spread estimation, frequency offset estimation, and Doppler spread estimation. Timing estimation and frequency offset estimation can be used to achieve synchronization between the transmitter and the receiver. The results of delay spread estimation and Doppler spread estimation are important parameters for channel estimation and can be used to assist the demodulation reference signal (Demodulation Reference Signal, DMRS) in achieving more accurate channel estimation.

For TRS deployed on FR1 (low frequency), a UE may be configured with one or more TRS resource sets. Each TRS resource set contains four TRS resources, which exist in two consecutive slots, with two TRS resources in each slot; for TRS deployed on FR2 (high frequency), a UE may also be configured with one or more TRS resource sets. A TRS resource set may contain TRS resources in only one slot, in which case there are only two TRS resources; and a TRS resource set may also contain four TRS resources, distributed in pairs across two consecutive slots.

Therefore, in the related art, the range of delay information between multiple CSI-RSs that CJT CSI can handle is limited, and scenarios with large inter-TRP delays cannot be addressed. One solution is for the terminal to perform delay feedback between CJT TRPs. Therefore, how to perform delay feedback between CJT TRPs is a technical problem that needs to be solved in the related art. In addition, if there is delay feedback between CJT TRPs, there is overlap with the delay information associated with CJT CSI. Therefore, how to perform CSI feedback in the presence of delay feedback between CJT TRPs is also a technical problem that needs to be solved in the related art.

To address the above technical problems, embodiments of the present application provide a scheme for channel state information feedback and a scheme for delay information feedback.

The technical solutions provided in the embodiments of the present application are described in detail below in conjunction with the accompanying drawings through some embodiments and application scenarios thereof.

FIG. 2 is a schematic flowchart of a channel state information feedback method according to an embodiment of the present application. The method 200 may be performed by a terminal. To be specific, the method may be performed by software or hardware installed on the terminal. As shown in FIG. 2, the method may include the following steps.

S210. The terminal determines at least one target delay feedback associated with target MTRP CSI to be obtained.

In this embodiment of the present application, one acquisition of the target MTRP CSI is associated with at least one target delay feedback, that is, when performing MTRP CSI acquisition, the terminal needs to take into account the delay condition of the at least one delay feedback associated with the MTRP CSI.

Optionally, part or all of the methods in embodiments of the present application may also be applied to scenarios where one acquisition of the target MTRP CSI is associated with at least one target frequency shift feedback, that is, when performing MTRP CSI acquisition, the terminal may take into account the frequency shift (frequency shift) condition of the at least one frequency shift feedback associated with the MTRP CSI.

In this embodiment of the present application, multiple TRPs may be TRPs that perform CJT, and therefore, MTRP CSI may also be referred to as CJT CSI.

In this embodiment of the present application, MTRP CSI is CSI obtained through multiple reference signals. In actual systems, the present application may also be applied to cases where MTRP CSI is CSI obtained through multiple reference signal port groups.

S212. The terminal obtains and feeds back the target MTRP CSI based on the at least one target delay feedback.

For MTRP CSI acquisition, particularly CJT CSI obtained and fed back by the terminal based on multiple CSI-RSs, the terminal may obtain delay information between multiple CSI-RSs based on each CSI-RS and its associated quasi-co-location information. The delay information may include at least one of air interface propagation delay and synchronization delay between multiple TRPs, where the multiple TRPs are associated with the multiple CSI-RSs.

Optionally, for MTRP CSI acquisition, particularly CJT CSI obtained and fed back by the terminal based on multiple CSI-RS port groups, the terminal may obtain delay information between multiple CSI-RS port groups based on each CSI-RS port group and its associated quasi-co-location information. The delay information may include at least one of air interface propagation delay and synchronization delay between multiple TRPs, where the multiple TRPs are associated with the multiple CSI-RS port groups, and each CSI-RS port group is associated with at least one CSI-RS port. The multiple CSI-RS port groups are not limited to being obtained according to network higher-layer signaling or determined by the terminal.

In particular, if the terminal has fed back at least one delay feedback to the network before obtaining and feeding back the CJT CSI, the network-side device has obtained all or part of the delay information between the multiple CSI-RSs. At this time, when obtaining the delay information between the multiple CSI-RSs, the terminal can exclude the part of the delay information that has already been fed back, or when obtaining the CJT CSI associated with the multiple CSI-RSs, the terminal can exclude the impact of the delay information that has already been fed back, that is, the delay information embodied in the CJT CSI does not include the fed back delay information. In this way, the applicable delay range of the CJT CSI fed back by the terminal can be improved, and it can also help the network-side device obtain more accurate delay information. This effectively improves transmission efficiency and user experience rate. Further, this avoids repeated feedback in the delay feedback associated with MTRP CSI, thus reducing feedback overhead.

In summary, one acquisition of the target MTRP CSI is associated with at least one target delay feedback, that is, when performing the target MTRP CSI acquisition, the delay condition of the at least one target delay feedback associated with the target MTRP CSI needs to be taken into account.

One optional implementation is as follows: one acquisition of the target MTRP CSI is associated with one target delay feedback, and the inter-TRP delay information required for target MTRP CSI acquisition can be obtained through the target delay feedback. In other words, during the target delay feedback, the terminal feeds back at least the delay information required for target MTRP CSI acquisition.

Another optional implementation is as follows: one acquisition of the target MTRP CSI is associated with one target delay feedback, and part of the inter-TRP delay information required for target MTRP CSI acquisition can be obtained through the target delay feedback. In other words, during the target delay feedback, the terminal feeds back part of the delay information required for target MTRP CSI acquisition.

Another optional implementation is as follows: one acquisition of the MTRP CSI is associated with multiple target delay feedbacks, and the inter-TRP delay information required for MTRP CSI acquisition can be obtained through the multiple target delay feedbacks. In other words, during one of the at least one target delay feedback, the terminal only feeds back part of the delay information required for MTRP CSI acquisition. For example, the network-side device triggers the terminal to perform two delay feedbacks. In the first delay feedback, the delay information between TRP1, TRP2, and TRP3 is fed back; in the second delay feedback, the delay information between TRP3 and TRP4 is fed back. Subsequently, the network-side device triggers one CJT CSI report, where the CJT CSI report is associated with three CSI-RSs, associated with TRP1, TRP2, and TRP4 respectively. Then, when obtaining the CJT CSI, the two delay feedbacks may be referred to obtain the delay information between TRP1, TRP2, and TRP4.

In one optional implementation, the determining, by the terminal, at least one target delay feedback associated with target MTRP CSI to be obtained may include: in a case that a first CSI report configuration is associated with multiple CSI reference signals CSI-RSs, the multiple CSI-RSs are used to obtain the target MTRP CSI, and a first association relationship exists between the multiple CSI-RSs and the at least one target delay feedback, determining that the target MTRP CSI is associated with the at least one target delay feedback. In this optional implementation, if there is a first CSI report configuration associated with multiple CSI-RSs and used to obtain target MTRP CSI, and a first association relationship exists between the multiple CSI-RSs and at least one target delay feedback, then the obtained target MTRP CSI is associated with the at least one target delay feedback. For example, the obtained target MTRP CSI does not include the delay fed back by the terminal during the at least one target delay feedback.

Optionally, the first association relationship is typically established through higher-layer signaling, and the first association relationship may include one of the following types:
1. A first TRS set is associated with a CSI-RS set associated with multiple CSI-RSs, and the first TRS set is associated with one target delay feedback.

For example, a piece of indication information is associated with configuration signaling in the CSI-RS set associated with target MTRP CSI, and through the indication information, a first TRS set can be associated. Further, the terminal associates with one target delay feedback according to the first TRS set. Optionally, the indication information includes a TRS set ID. Optionally, the first TRS set is associated with a CSI report configuration (used to report delay information), and the TRS set is the TRS set associated with the CSI report configuration.

2. Multiple second TRS sets are associated with a CSI-RS set associated with multiple CSI-RSs, and the multiple second TRS sets are associated with one target delay feedback.

For example, a piece of indication information is associated with configuration signaling in the CSI-RS set associated with target MTRP CSI, and through the indication information, multiple second TRS sets can be associated. Further, the terminal associates with one delay feedback according to the multiple second TRS sets. Optionally, the indication information includes multiple TRS set IDs or multiple TRS IDs. Optionally, the multiple TRS sets are associated with a CSI report configuration (used to report delay information), and the multiple TRS sets are the TRS sets associated with the CSI report configuration.

3. Multiple second TRS sets are associated with a CSI-RS set associated with multiple CSI-RSs, and the multiple second TRS sets are associated with multiple target delay feedbacks.

For example, a piece of indication information is associated with configuration signaling in the CSI-RS set associated with target MTRP CSI, and through the indication information, multiple second TRS sets can be associated. Further, the terminal associates with multiple delay feedbacks according to the multiple second TRS sets. Optionally, the indication information includes multiple TRS set IDs or multiple TRS IDs. Optionally, the multiple second TRS sets are associated with multiple CSI report configurations (used to report delay information), and the multiple TRS sets are the TRS sets associated with the multiple CSI report configurations.

4. At least one CSI report configuration is associated with a CSI-RS set associated with multiple CSI-RSs, and the at least one first CSI report configuration is associated with at least one target delay feedback.

For example, a piece of indication information is associated with configuration signaling in the CSI-RS set associated with target MTRP CSI, and through the indication information, at least one CSI report configuration can be associated. Further, the terminal associates with at least one delay feedback according to the at least one CSI report configuration. Optionally, the indication information includes multiple CSI report configuration IDs.

5. Each CSI-RS among multiple CSI-RSs is associated with a TRS or a TRS set, and the multiple TRSs or TRS sets associated with the multiple CSI-RSs are associated with at least one target delay feedback.

For example, in multiple CSI-RS configuration signaling for the target MTRP CSI, each CSI-RS configuration signaling is associated with a piece of indication information, and through the indication information, a TRS set or a TRS can be associated. Further, the terminal associates with at least one delay feedback according to the multiple TRS sets or multiple TRSs. Optionally, the indication information includes multiple TRS set IDs or multiple TRS IDs. Optionally, the multiple TRS sets or multiple TRSs are associated with at least one CSI report configuration (used to report delay information).

6. Each CSI-RS among multiple CSI-RSs is associated with a physical cell identifier (Physical Cell Identifier or Physical-layer Cell Identity, PCI), and the multiple PCIs associated with the multiple CSI-RSs are associated with at least one target delay feedback.

For example, in the multiple CSI-RS configuration signaling for target MTRP CSI, each CSI-RS configuration signaling is associated with a piece of PCI indication information. Through multiple PCI indication information, the terminal can associate with at least one TRS set or at least one CSI report configuration (CSI report configuration used to report delay information). Further, the terminal associates with at least one delay feedback according to the at least one TRS set or at least one CSI report configuration.

In another optional implementation, the terminal determines the associated at least one target delay feedback through a second CSI report configuration associated with the MTRP CSI. For example, if there is a second CSI report configuration used to obtain the target MTRP CSI, and there is a second association relationship between the CSI report configuration and the at least one target delay feedback, then the obtained MTRP CSI does not include the delay fed back by the terminal during the at least one target delay feedback.

Optionally, the second association relationship may be established through higher-layer signaling.

Optionally, the second association relationship may include one of the following items.
(1) The second CSI report configuration is associated with at least one CSI report configuration, and the at least one CSI report configuration is associated with the at least one target delay feedback.

For example, a piece of indication information is associated with the second CSI report configuration associated with target MTRP CSI. Through the indication information, the terminal can associate with at least one CSI report configuration (CSI report configuration used to report delay information). Further, the terminal can associate with at least one target delay feedback according to the at least one CSI report configuration.

(2) The second CSI report configuration is associated with at least one PCI, and the at least one PCI is associated with the at least one target delay feedback.

For example, a piece of indication information is associated with the second CSI report configuration associated with target MTRP CSI. Through the indication information, the terminal obtains at least one PCI. The terminal can associate with at least one CSI report configuration (CSI report configuration used to report delay information) through the PCI. Further, the terminal associates with at least one delay feedback according to the at least one CSI report configuration.

In one optional implementation, for MTRP CSI acquisition, the terminal may need to consider frequency shift information between multiple CSI-RSs or multiple TRPs, and the foregoing method for determining delay information can be used to determine frequency shift information. The frequency shift information may include at least one of frequency shift offset between multiple TRPs and frequency shift of multiple TRPs. That is, the determining, by the terminal, the at least one target frequency shift feedback associated with the target MTRP CSI to be obtained may include: in a case that a first CSI report configuration is associated with multiple CSI reference signals CSI-RSs, the multiple CSI-RSs are used to obtain the target MTRP CSI, and a first association relationship exists between the multiple CSI-RSs and the at least one target frequency shift feedback, determining that the target MTRP CSI is associated with the at least one target frequency shift feedback; or in a case that the terminal uses the second CSI report configuration associated with the MTRP CSI, and there is a second association relationship between the CSI report configuration and the at least one target frequency shift feedback, determining the associated at least one target frequency shift feedback.

In one possible implementation, when obtaining target MTRP CSI, the terminal may obtain, based on the at least one target delay feedback, the target PMI in the obtained target MTRP CSI, and the target PMI may satisfy one of the following items.
(1) The target PMI does not include any delay indication between multiple reference signals.

The multiple reference signals may be associated with multiple TRPs, then the target PMI does not include an inter-TRP delay indication.

For example, if there is a CSI report setting associated with multiple CSI-RSs and used to obtain target CJT CSI, and a first association relationship exists between the multiple CSI-RSs and the at least one target delay feedback, or a second association relationship exists between the CSI report setting and the at least one delay feedback, the CJT PMI associated with the target CJT CSI does not include an inter-TRP delay indication (i₁,₉). For example, if higher-layer signaling codebookMode is configured as 'mode1', the CJT PMI does not include or is not associated with at least one delay offset or frequency domain basis vector offset or offset i₁,₉ associated with at least one CSI-RS selected by the terminal. For another example, when the first association relationship or second association relationship exists, the terminal does not support the configuration of the higher-layer signaling codebookMode as 'mode1', and only supports the configuration of the higher-layer signaling codebookMode as 'mode2'.

(2) The target PMI includes delay indications of part of multiple reference signals.

For example, the CJT PMI associated with the target CJT CSI includes delay indications (i₁,₉) between some of TRPs, and these TRPs are some of TRPs not associated with any delay feedback. For example, there is a CSI report setting associated with four CSI-RSs respectively associated with TRP1/TRP2/ TRP3/TRP4. According to the association relationship between the CSI report setting and delay feedback, the terminal associates with the previously fed back delay information between TRP1, TRP2, TRP/3. At this time, if the reference CSI-RS used to obtain the delay indication (i₁,₉) is not associated with TRP4, the terminal needs to feed back the delay indication (i₁,₉) associated with TRP4, and the delay indication is associated with only one offset. If the reference CSI-RS is associated with TRP4, the terminal needs to feed back the delay indication (i₁,₉) associated with TRP1 or TRP2 or TRP3 or the delay indication (i₁,₉) associated with TRP4, and the delay indication is associated with only one offset.

(3) The target PMI includes a delay indication associated with a first reference signal among the multiple reference signals, where the first reference signal is not associated with any delay feedback, and the first reference signal is part of the multiple reference signals.

(4) The target PMI includes a delay indication of a second reference signal among the multiple reference signals, where a time interval between the most recent delay feedback associated with the second reference signal and a first time is greater than a specific value, and the first time may include one of the following: a feedback time of the MTRP CSI, a time corresponding to the CSI reference resource associated with the MTRP CSI, and a CSI reference slot associated with the MTRP CSI. The specific value is a value specified in a protocol, a value indicated by a network, or a value fed back by the terminal. The second reference signal is part of the multiple reference signals.

The CSI reference resource (CSI reference resource) or CSI reference slot (CSI reference slot) may be one of the following as indicated by the network-side device or specified in a protocol: a downlink slot, an uplink slot, a downlink symbol, an uplink symbol, and a time instant.

(5) The indication ranges associated with the delay indications of respective reference signals among the multiple reference signals included in the target PMI are not completely the same.

For example, when some of the reference signals are not associated with any delay feedback, the indication ranges of the delay indications associated with these reference signals are wider. When some of the reference signals are associated with delay feedback, the indication ranges of the delay indications associated with these reference signals are narrower. In this way, the overhead of the delay indication can be reduced.

For another example, when the feedback time of the delay feedback associated with some of the reference signals exceeds a certain threshold (that is, excessively outdated) or is too far from the MTRP CSI report, the indication ranges of the delay indications associated with these reference signals are wider, and the indication ranges of the delay indications associated with the remaining reference signals are narrower. In this way, the overhead of the delay indication can be reduced.

(6) The target PMI does not include a delay indication of a third reference signal among the multiple reference signals, where the most recent delay feedback associated with the third reference signal occurs after a second time, and the second time may include one of the following: a time corresponding to the CSI reference resource associated with the MTRP CSI, and a CSI reference slot associated with the MTRP CSI. The third reference signal is part of the multiple reference signals. The CSI reference resource (CSI reference resource) or CSI reference slot (CSI reference slot) may be one of the following as indicated by the network-side device or specified in a protocol: a downlink slot, an uplink slot, a downlink symbol, an uplink symbol, and a time instant.

In one optional implementation, that the terminal obtains the target MTRP CSI based on the at least one target delay feedback may include:
obtaining, by the terminal, the target MTRP CSI based on the at least one target delay feedback, where the obtained target MTRP CSI does not include or is not associated with a delay fed back by the terminal in the at least one target delay feedback; and the at least one target delay feedback includes at least one of the following:
first delay feedback, the first delay feedback including: at least one most recent delay feedback prior to a third time; and
second delay feedback, the second delay feedback including: at least one delay feedback associated with a specific reference signal that is most recently received prior to the third time, the specific reference signal being a reference signal used to obtain at least one delay feedback.

The third time includes one of the following: a time corresponding to the CSI reference resource associated with the target MTRP CSI, and a CSI reference slot associated with the target MTRP CSI. For example, the third time may be one of the following: a time corresponding to the CSI reference resource associated with the first CSI report configuration, a CSI reference slot associated with the first CSI report configuration, a time corresponding to the CSI reference resource associated with the second CSI report configuration, and a CSI reference slot associated with the second CSI report configuration.

The foregoing optional implementation may also be applied when the terminal obtains the target MTRP CSI based on the at least one target frequency shift feedback. That is, the terminal obtains the target MTRP CSI based on the at least one target frequency shift feedback, where the obtained target MTRP CSI shall take into account the frequency shift or frequency shift offset fed back by the terminal in the at least one target frequency shift feedback; and the at least one target frequency shift feedback includes at least one of the following:
first frequency shift feedback, the first frequency shift feedback including: the most recent at least one frequency shift feedback performed prior to the third time; and
second frequency shift feedback, the second frequency shift feedback including: the most recent at least one frequency shift feedback associated with a specific reference signal received prior to the third time, where the specific reference signal is a reference signal used to obtain the at least one frequency shift feedback.

The third time includes one of the following: a time corresponding to the CSI reference resource associated with the target MTRP CSI, and a CSI reference slot associated with the target MTRP CSI. For example, the third time may be one of the following: a time corresponding to the CSI reference resource associated with the first CSI report configuration, a CSI reference slot associated with the first CSI report configuration, a time corresponding to the CSI reference resource associated with the second CSI report configuration, and a CSI reference slot associated with the second CSI report configuration.

In one optional implementation, before S210, the method may further include one of the following steps.

Step a. The terminal obtains and feeds back delay information based on at least one first reference signal set configured by a network-side device.

The at least one first reference signal set is associated with multiple TRPs. For example, the network-side device configures N reference signal sets (N greater than or equal to 1), and the terminal obtains and feeds back delay information based on the N reference signal sets.

Step b. The terminal obtains and feeds back delay information based on multiple first reference signal sets and a first indication configured by a network-side device, where the first indication is used to indicate a target reference signal set for obtaining delay information in the multiple first reference signal sets.

The multiple first reference signal sets are associated with multiple TRPs. For example, the network-side device configures N reference signal sets (N greater than 1) and a first indication, and the first indication is used to indicate the reference signal set associated with the delay information obtained and fed back by the terminal.

Step c. The terminal obtains and feeds back delay information based on one first reference signal set and a second indication configured by a network-side device, where the second indication is used to indicate a target reference signal for obtaining delay information in the first reference signal set.

For example, the network-side device configures one reference signal set and a second indication, and the second indication is used to indicate the reference signal associated with the delay information obtained and fed back by the terminal.

The steps a, b, and c in the foregoing optional implementation may also be applied when the terminal obtains and feeds back frequency shift information. For example: the terminal obtains and feeds back frequency shift information based on at least one first reference signal set configured by the network-side device.

In one optional implementation, in a case that the at least one first reference signal set includes multiple first reference signal sets, the multiple first reference signal sets can satisfy at least one of the following items:
(1) PCIs associated with the multiple first reference signal sets are not completely the same; that is, the PCIs associated with respective first reference signal sets in the multiple first reference signal sets may be different.
(2) The multiple first reference signal sets are transmitted in consecutive slots. That is, respective reference signals in the multiple first reference signal sets are transmitted in consecutive slots. Optionally, the consecutive slots may be consecutive downlink slots.

In one optional implementation, in a case that the at least one first reference signal set includes multiple first reference signal sets, the method may further include: feeding back, by the terminal, first capability information to the network-side device, where the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, and a first symbol interval supported by the terminal, where the first slot interval is a slot interval between two reference signal sets among the multiple reference signal sets, the first symbol interval is a symbol interval between two reference signal sets among the multiple reference signal sets, and the two reference signal sets include one of the following: two adjacent reference signal sets among the multiple reference signal sets, and two reference signal sets with a maximum interval among the multiple reference signal sets.

For example, reference signal set 1 is associated with slot offset 1, reference signal set 2 is associated with slot offset 2, reference signal set 3 is associated with slot offset 3, and slot offset 1 < slot offset 2 < slot offset 3, then in this case, a difference between slot offset 2 and slot offset 1 is not greater than the first slot interval, and a difference between slot offset 3 and slot offset 2 is not greater than the first slot interval.

For another example, reference signal set 1 is associated with slot offset 1, reference signal set 2 is associated with slot offset 2, reference signal set 3 is associated with slot offset 3, and slot offset 1 < slot offset 2 < slot offset 3, then in this case, a difference between slot offset 3 and slot offset 1 is not greater than the first slot interval.

In one optional implementation, in a case that the at least one first reference signal set includes one first reference signal set, all reference signals in one first reference signal set satisfy at least one of the following items:
(1) PCIs associated with all the reference signals are not completely the same; that is, the PCIs associated with respective reference signals in the first reference signal set may be different; and
(2) Power control offsets associated with all the reference signals are not completely the same, for example, powerControlOffsetSS or powerControlOffset associated with respective reference signals in the first reference signal set may be different.

In one optional implementation, in a case that the at least one first reference signal set includes one first reference signal set, a reference signal in the one first reference signal set is allowed to serve as a delay-related quasi-co-location reference signal. For example, if the network-side device configures the terminal to obtain the delay between multiple reference signals based on the multiple reference signals in one reference signal set (TRS set), then the multiple reference signals may serve as quasi-co-location reference signals for other signals (CSI-RS, DMRS, PDSCH), and the parameters associated with the quasi-co-location type are delay-related parameters.

Optionally, a reference signal in one first reference signal set is not allowed to serve as a quasi-co-location reference signal related to Doppler.

Optionally, a reference signal in the one first reference signal set is not associated with a second reference signal set, where reference signals in the second reference signal set are used to provide Doppler-related quasi-co-location information. That is, reference signals in one first reference signal set cannot be associated with other reference signal sets, and reference signals in the other reference signal sets can be used to provide Doppler-related quasi-co-location information (average delay and/or delay spread).

In one optional implementation, in a case that the at least one first reference signal set includes one first reference signal set, the method further includes:
feeding back, by the terminal, second capability information to the network-side device, where the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, where the second slot interval is a slot interval between two reference signals among the multiple reference signals, the second symbol interval is a symbol interval between two reference signals among the multiple reference signals, and the two reference signals include one of the following: two adjacent reference signals among the multiple reference signals, and two reference signals with a maximum interval among the multiple reference signals.

For example, reference signal 1 is associated with slot offset 1, reference signal 2 is associated with slot offset 2, reference signal 3 is associated with slot offset 3, and slot offset 1 < slot offset 2 < slot offset 3, then in this case, a difference between slot offset 2 and slot offset 1 is not greater than the second slot interval, and a difference between slot offset 3 and slot offset 2 is not greater than the second slot interval.

For another example, reference signal 1 is associated with slot offset 1, reference signal 2 is associated with slot offset 2, reference signal 3 is associated with slot offset 3, and slot offset 1 < slot offset 2 < slot offset 3, then in this case, a difference between slot offset 3 and slot offset 1 is not greater than the second slot interval.

Through the foregoing technical solutions provided in the embodiments of the present application, by establishing the association relationship between the MTRP CSI and the delay feedback, the applicable delay range of the MTRP CSI fed back by the terminal can be expanded, and it can also help the network-side device obtain more accurate delay information. This effectively improves transmission efficiency and user experience rate.

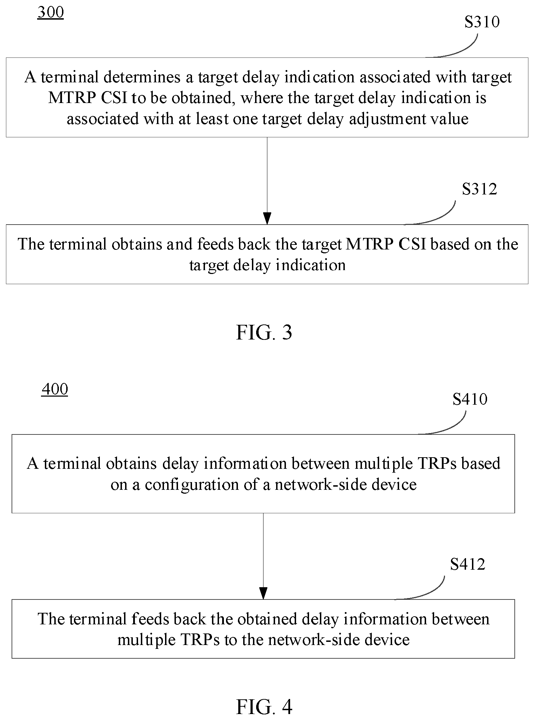

FIG. 3 is another schematic flowchart of a channel state information feedback method according to an embodiment of the present application. The method 300 may be performed by a terminal. To be specific, the method may be performed by software or hardware installed on the terminal. As shown in FIG. 3, the method may include the following steps.

S310. The terminal determines a target delay indication associated with target MTRP CSI to be obtained, where the target delay indication is associated with at least one target delay adjustment value.

In this embodiment of the present application, the target delay indication may be sent by a network-side device, the target delay indication is associated with at least one delay adjustment value, and the terminal may obtain the target MTRP CSI based on the delay adjustment value.

S312. The terminal obtains and feeds back the target MTRP CSI based on the target delay indication.

For example, the network-side device indicates to the terminal, via signaling (not limited to DCI, MAC CE, or RRC signaling), multiple delay adjustment values to be considered or adjusted during the calculation of the current MTRP CSI. The number of the delay adjustment values may be equal to the number of CSI-RSs associated with MTRP CSI minus 1, where one CSI-RS is a reference CSI-RS. For the delay associated with CSI-RSs other than the reference CSI-RS, the terminal subtracts the corresponding adjustment value to further obtain the MTRP CSI.

The reference CSI-RS may be the first one among multiple CSI-RSs configured by the network, or the CSI-RS associated with the minimum delay, or a CSI-RS indicated by the network, or a CSI-RS indicated by the terminal.

The correspondence between the CSI-RS and the delay may follow the configuration order of the CSI-RSs, with the reference CSI-RS excluded, that is, the first non-reference CSI-RS is associated with the first adjustment value, the second non-reference CSI-RS is associated with the second adjustment value, and so on.

The method in this embodiment of the present application may also be applied when the terminal determines a target frequency shift indication associated with target MTRP CSI to be obtained, where the target frequency shift indication is associated with at least one target frequency shift value. The terminal obtains and feeds back the target MTRP CSI based on the target frequency shift indication.

For example, the network-side device indicates to the terminal, via signaling (not limited to DCI, MAC CE, or RRC signaling), multiple frequency shift values to be considered or adjusted during the calculation of the current MTRP CSI. When obtaining MTRP CSI, the terminal performs pre-compensation based on the multiple frequency shift values to further obtain the MTRP CSI. The correspondence between the CSI-RSs and the frequency shift values may follow the configuration order of the CSI-RSs, that is, the first CSI-RS is associated with the first frequency shift value, the second CSI-RS is associated with the second frequency shift value, and so on.

Through the technical solutions provided in this embodiment of the present application, the terminal obtains and feeds back target MTRP CSI by obtaining the target delay indication, thereby flexibly adjusting the delay range or magnitude corresponding to the delay information associated with the MTRP CSI fed back by the terminal. In addition, if the technical solution is applied when the terminal obtains and feeds back the target MTRP CSI by obtaining the target frequency shift indication, flexibility can also be improved.

In one optional implementation, that the terminal determines a target delay indication associated with target MTRP CSI to be obtained may include at least one of the following steps:
(1) The terminal obtains a first delay indication, where the first delay indication is used to indicate a group of delay adjustment values associated with a target CSI report configuration, and the target CSI report configuration is a CSI report configuration associated with the target MTRP CSI.

Optionally, before S310, the method may further include: obtaining, by the terminal, multiple groups of delay adjustment values, where each group of target delay adjustment values is associated with one CSI report configuration.

For example, the network-side device notifies the terminal of multiple groups of delay adjustment values via higher-layer signaling or MAC-CE, and then sends a first delay indication used to indicate one group of delay adjustment values therein. The CSI report setting associated with the MTRP CSI is associated with one group of delay adjustment values therein.

(2) The terminal obtains a second delay indication, where the second delay indication is used to indicate at least one delay adjustment value associated with a target CSI report configuration, and the target CSI report configuration is a CSI report configuration associated with the target MTRP CSI.

Optionally, before S310, the method may further include: obtaining, by the terminal, multiple delay adjustment values, where each delay adjustment value is associated with one CSI report configuration.

For example, the network-side device notifies the terminal of multiple delay adjustment values via higher-layer signaling or MAC-CE, and the CSI report configuration associated with the MTRP CSI is associated with at least one delay adjustment value therein, where each associated delay adjustment value comes from the multiple delay adjustment values notified by the network.

The target delay indication includes at least one of the following: the first delay indication, and the second delay indication.

In one optional implementation, in S312, that the terminal obtains the target MTRP CSI based on the target delay indication may include: obtaining, by the terminal, the target MTRP CSI based on the target delay indication, where the delay value contained in the obtained target MTRP CSI is a difference between a target delay associated with at least one reference signal and the at least one target delay adjustment value.

In the foregoing implementation, for one acquisition of the MTRP CSI, the delay indication associated with the MTRP CSI may be referred to, and the delay indication may be indicated by the network. Further, to improve flexibility, the network may pre-indicate multiple groups of delay adjustment values or multiple delay adjustment values. The network selects or activates at least one group of delay adjustment values or at least one delay adjustment value via signaling. Further, based on the selected or activated at least one group of delay adjustment values or at least one delay adjustment value, the network may associate at least one group of delay adjustment values or at least one delay adjustment value with the MTRP CSI. Through the selection or activation process, the network can flexibly control the delay indication condition associated with the MTRP CSI.

If a process of obtaining frequency shift indication exists, the network-side device may pre-indicate multiple groups of frequency shift values or multiple frequency shift values. The network-side device selects or activates at least one group of frequency shift values or at least one frequency shift value through signaling. Through the selection or activation process, the network-side device can flexibly control the frequency shift condition associated with the MTRP CSI.

One optional way is as follows: the network notifies the terminal of multiple groups of delay adjustment values via higher-layer signaling or MAC-CE. When the network triggers or activates the CSI report setting associated with the MTRP CSI, it associates or indicates one group of delay adjustment values therein for the CSI report setting via signaling. The one group of delay adjustment values includes at least one delay adjustment value, and the terminal obtains the MTRP CSI based on the delay adjustment value.

Another optional way is as follows: the network notifies the terminal of multiple delay adjustment values via higher-layer signaling or MAC-CE. When the network triggers or activates the CSI report setting associated with the MTRP CSI, it associates or indicates at least one delay adjustment value therein for the CSI report configuration via signaling. The terminal obtains the MTRP CSI based on the delay adjustment value.

By adopting the technical solutions provided in this embodiment of the present application, by indicating delay adjustment values to the terminal, the network-side device can flexibly adjust the delay range or magnitude corresponding to the delay information associated with the MTRP CSI fed back by the terminal, thereby improving the flexibility of the network-side device.

FIG. 4 is a schematic flowchart of a delay information feedback method according to an embodiment of the present application. The method 400 may be performed by a terminal. To be specific, the method may be performed by software or hardware installed on the terminal. As shown in FIG. 4, the method may include the following steps.

S410. The terminal obtains delay information between multiple TRPs based on a configuration of a network-side device.

The configuration of the network-side device includes one of the following:
(1) at least one first reference signal set, where the at least one first reference signal set is associated with multiple TRPs;
(2) multiple first reference signal sets and a first indication, where the first indication is used to indicate a target reference signal set for obtaining delay information among the multiple first reference signal sets, and the multiple first reference signal sets are associated with multiple TRPs; and
(3) one first reference signal set and a second indication, where the second indication is used to indicate a target reference signal for obtaining delay information in the first reference signal set, and the first reference signal set is associated with multiple TRPs.

S412. The terminal feeds back the obtained delay information between multiple TRPs to the network-side device.

Through the technical solutions provided in this embodiment of the present application, the terminal may obtain and feed back delay information between multiple TRPs based on the configuration of the network-side device, thereby achieving delay feedback between multiple TRPs.

The technical solutions in the above embodiments may also be applied when the terminal obtains and feeds back frequency shift information. For example: the terminal obtains and feeds back frequency shift information based on at least one first reference signal set configured by the network-side device.

In one optional implementation, in a case that the at least one first reference signal set includes multiple first reference signal sets, the multiple reference signal sets can satisfy at least one of the following that:
(1) PCIs associated with the multiple first reference signal sets are not completely the same; that is, the PCIs associated with respective first reference signal sets among the multiple first reference signal sets may be different; and
(2) the multiple first reference signal sets are transmitted in consecutive slots, that is, respective reference signals in the multiple first reference signal sets are transmitted in consecutive slots. Optionally, the consecutive slots may be consecutive downlink slots.

In one optional implementation, in a case that the at least one first reference signal set includes multiple first reference signal sets, the method may further include: feeding back, by the terminal, first capability information to the network-side device, where the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, and a first symbol interval supported by the terminal, where the first slot interval is a slot interval between two reference signal sets among the multiple reference signal sets, the first symbol interval is a symbol interval between two reference signal sets among the multiple reference signal sets, and the two reference signal sets include one of the following: two adjacent reference signal sets among the multiple reference signal sets, and two reference signal sets with a maximum interval among the multiple reference signal sets.

For example, reference signal set 1 is associated with slot offset 1, reference signal set 2 is associated with slot offset 2, reference signal set 3 is associated with slot offset 3, and slot offset 1 < slot offset 2 < slot offset 3, then in this case, a difference between slot offset 2 and slot offset 1 is not greater than the first slot interval, and a difference between slot offset 3 and slot offset 2 is not greater than the first slot interval.

For another example, reference signal set 1 is associated with slot offset 1, reference signal set 2 is associated with slot offset 2, reference signal set 3 is associated with slot offset 3, and slot offset 1 < slot offset 2 < slot offset 3, then in this case, a difference between slot offset 3 and slot offset 1 is not greater than the first slot interval.

In one optional implementation, in a case that the at least one first reference signal set includes one first reference signal set, all reference signals in one first reference signal set satisfy at least one of the following that:
(1) PCIs associated with all the reference signals are not completely the same; that is, the PCIs associated with respective reference signals in the first reference signal set may be different; and
(2) Power control offsets associated with all the reference signals are not completely the same, for example, powerControlOffsetSS or powerControlOffset associated with respective reference signals in the first reference signal set may be different.

In one optional implementation, in a case that the at least one first reference signal set includes one first reference signal set, a reference signal in the one first reference signal set is allowed to serve as a delay-related quasi-co-location reference signal. For example, if the network-side device configures the terminal to obtain the delay between multiple reference signals based on the multiple reference signals in one reference signal set (TRS set), then the multiple reference signals may serve as quasi-co-location reference signals for other signals (CSI-RS, DMRS, PDSCH), and the parameters associated with the quasi-co-location type are delay-related parameters.

Optionally, a reference signal in the one first reference signal set is not associated with a second reference signal set, where reference signals in the second reference signal set are used to provide Doppler-related quasi-co-location information. That is, reference signals in one first reference signal set cannot be associated with other reference signal sets, and reference signals in the other reference signal sets can be used to provide Doppler-related quasi-co-location information (average delay and/or delay spread).

In one optional implementation, in a case that the at least one first reference signal set includes one first reference signal set, the method further includes:
feeding back, by the terminal, second capability information to the network-side device, where the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, where the second slot interval is a slot interval between two reference signals among the multiple reference signals, the second symbol interval is a symbol interval between two reference signals among the multiple reference signals, and the two reference signals include one of the following: two adjacent reference signals among the multiple reference signals, and two reference signals with a maximum interval among the multiple reference signals.

For example, reference signal 1 is associated with slot offset 1, reference signal 2 is associated with slot offset 2, reference signal 3 is associated with slot offset 3, and slot offset 1 < slot offset 2 < slot offset 3, then in this case, a difference between slot offset 2 and slot offset 1 is not greater than the second slot interval, and a difference between slot offset 3 and slot offset 2 is not greater than the second slot interval.

For another example, reference signal 1 is associated with slot offset 1, reference signal 2 is associated with slot offset 2, reference signal 3 is associated with slot offset 3, and slot offset 1 < slot offset 2 < slot offset 3, then in this case, a difference between slot offset 3 and slot offset 1 is not greater than the second slot interval.

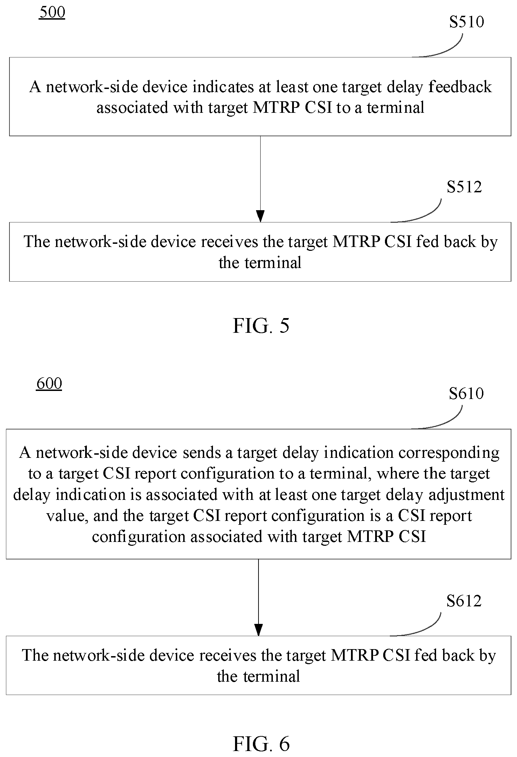

FIG. 5 is a schematic flowchart of a channel state information obtaining method according to an embodiment of the present application. The method 500 may be performed by a network-side device. To be specific, the method may be performed by software or hardware installed on the network-side device. It should be noted that method 500 corresponds to the execution steps of the network-side device in the method 200. The following embodiments only describe the operations of the network-side device. For other unspecified details, reference may be made to the relevant description of the foregoing method 200.

As shown in FIG. 5, the method may include the following steps.

S510. The network-side device indicates at least one target delay feedback associated with target MTRP CSI to a terminal.

Optionally, in this embodiment of the present application, part or all of the methods in embodiments of the present application may also be applied when one acquisition of the target MTRP CSI is associated with at least one target frequency shift feedback, that is, the network-side device may also indicate at least one target frequency shift feedback associated with target MTRP CSI to the terminal, and when performing MTRP CSI acquisition, the terminal may take into account the frequency shift (frequency shift) condition of the at least one target frequency shift feedback associated with the MTRP CSI.

In one optional implementation, the network-side device may indicate the at least one target delay feedback associated with the target MTRP CSI to the terminal by means of configuration or establishment of a first association relationship, where the first association relationship is an association between multiple CSI reference signals CSI-RSs associated with a first CSI report configuration and the at least one target delay feedback, and the multiple CSI-RSs are used to obtain the target MTRP CSI.

Optionally, the first association relationship may include one of the following that:
a CSI-RS set associated with the multiple CSI-RSs is associated with one first tracking reference signal TRS set, and the first TRS set is associated with one target delay feedback;
a CSI-RS set associated with the multiple CSI-RSs is associated with multiple second TRS sets, and the multiple second TRS sets are associated with the at least one target delay feedback;
a CSI-RS set associated with the multiple CSI-RSs is associated with at least one CSI report configuration, and the at least one CSI report configuration is associated with the at least one target delay feedback;
each CSI-RS among the multiple CSI-RSs is associated with a TRS or a TRS set, and the multiple TRSs or multiple TRS sets associated with the multiple CSI-RSs are associated with the at least one target delay feedback; and
each CSI-RS among the multiple CSI-RSs is associated with a physical cell identifier PCI, and the multiple PCIs associated with the multiple CSI-RSs are associated with the at least one target delay feedback.

In another optional implementation, the network-side device may also indicate the at least one target delay feedback associated with the target MTRP CSI to the terminal by means of configuration or establishment of a second association relationship, where the second association relationship is an association between a second CSI report configuration and the at least one target delay feedback, and the second CSI report is used to obtain the target MTRP CSI.

Optionally, the second association relationship may include one of the following that:
the second CSI report configuration is associated with at least one CSI report configuration, and the at least one CSI report configuration is associated with the at least one target delay feedback; and
the second CSI report configuration is associated with at least one PCI, and the at least one PCI is associated with the at least one target delay feedback.

In this embodiment of the present application, the network-side device may also use a similar method to indicate at least one target delay feedback associated with target MTRP CSI to the terminal. For example, the at least one target frequency shift feedback associated with the target MTRP CSI may be indicated to the terminal by means of configuration or establishment of a first association relationship, where the first association relationship is an association between multiple CSI reference signals CSI-RSs associated with a first CSI report configuration and the at least one target frequency shift feedback, and the multiple CSI-RSs are used to obtain the target MTRP CSI; or the network-side device may also indicate the at least one target delay feedback associated with the target MTRP CSI to the terminal by means of configuration or establishment of a second association relationship, where the second association relationship is an association between a second CSI report configuration and the at least one target frequency shift feedback, and the second CSI report is used to obtain the target MTRP CSI.

S512. The network-side device receives the target MTRP CSI fed back by the terminal.

After receiving the indication of the network-side device, the terminal may obtain and feed back target MTRP CSI according to the method described in the foregoing method 200. For details, refer to the relevant description in method 200 above, which will not be described herein again.

In one optional implementation, after the network-side device receives the target MTRP CSI fed back by the terminal, the method may further include the following step:
Step 1. The network-side device obtains delay information between MTRPs based on the at least one target delay feedback and the delay information in the target MTRP CSI.

Since in practical applications, the network-side device may indicate different target delay feedbacks associated with different target MTRP CSIs, optionally, before step 1, the method may further include: determining, by the network-side device, the at least one target delay feedback associated with the target MTRP CSI. To be specific, the network-side device determines the at least one target delay feedback associated with the target MTRP CSI fed back by the terminal.

Optionally, when obtaining delay information between MTRPs, the network-side device may obtain the target PMI in the target MTRP CSI, and then determine, based on the at least one target delay feedback, that the target PMI satisfies one of the following that:
the target PMI does not include a delay indication between multiple reference signals;
the target PMI includes delay indications of part of multiple reference signals;
the target PMI includes a delay indication associated with a first reference signal among the multiple reference signals, where the first reference signal is not associated with any delay feedback, and the first reference signal is part of the multiple reference signals;
the target PMI includes a delay indication of a second reference signal among the multiple reference signals, where a time interval from the most recent delay feedback associated with the second reference signal to a first time is greater than a specific value, where the first time includes one of the following: a feedback time of the MTRP CSI, a time corresponding to the CSI reference resource associated with the MTRP CSI, and a CSI reference slot associated with the MTRP CSI, the specific value is a value specified in a protocol or a value indicated by a network, and the second reference signal is part of the multiple reference signals;
indication ranges associated with the delay indications of respective reference signals among the multiple reference signals included in the target PMI are not completely the same; and
the target PMI does not include a delay indication of a third reference signal among the multiple reference signals, where the most recent delay feedback associated with the third reference signal occurs after a second time, where the second time includes one of the following: a time corresponding to the CSI reference resource associated with the MTRP CSI, and a CSI reference slot associated with the MTRP CSI, and the third reference signal is part of the multiple reference signals.

In one optional implementation, that the network-side device determines the at least one target delay feedback associated with the target MTRP CSI may include: determining, by the network-side device, that the at least one target delay feedback associated with the target MTRP CSI includes at least one of the following:
first delay feedback, the first delay feedback including: at least one most recent delay feedback prior to a third time; and
second delay feedback, the second delay feedback including: at least one delay feedback associated with a specific reference signal that is most recently received prior to the third time, the specific reference signal being a reference signal used to obtain at least one delay feedback; where
the third time includes one of the following: a time corresponding to the CSI reference resource associated with the target MTRP CSI, and a CSI reference slot associated with the target MTRP CSI.

The foregoing optional implementation may also be applied when the network-side device obtains frequency shift information between MTRPs based on the at least one target frequency shift feedback and the frequency shift information in the target MTRP CSI. That is, the terminal obtains frequency shift information between MTRPs based on the at least one target frequency shift feedback and the frequency shift information in the target MTRP CSI, where the obtained frequency shift information between MTRPs may take into account the frequency shift or frequency shift offset fed back by the terminal in the at least one target frequency shift feedback; and the at least one target frequency shift feedback includes at least one of the following:
first frequency shift feedback, the first frequency shift feedback including: the most recent at least one frequency shift feedback performed prior to the third time; and
second frequency shift feedback, the second frequency shift feedback including: the most recent at least one frequency shift feedback associated with a specific reference signal received prior to the third time, where the specific reference signal is a reference signal used to obtain the at least one frequency shift feedback.

The third time includes one of the following: a time corresponding to the CSI reference resource associated with the target MTRP CSI, and a CSI reference slot associated with the target MTRP CSI. For example, the third time may be one of the following: a time corresponding to the CSI reference resource associated with the first CSI report configuration, a CSI reference slot associated with the first CSI report configuration, a time corresponding to the CSI reference resource associated with the second CSI report configuration, and a CSI reference slot associated with the second CSI report configuration.

In one optional implementation, before S512, the method may further include: obtaining, by the network-side device, the delay information fed back by the terminal. The network-side device may determine the at least one target delay feedback based on the obtained delay information, and obtain delay information between MTRPs based on the at least one target delay feedback and the delay information in the target MTRP CSI.

Optionally, before the obtaining, by network-side device, the delay information fed back by the terminal, the method may further include the following step:
Step 1. The network-side device configures one of the following to the terminal:
at least one first reference signal set, where the at least one first reference signal set is associated with multiple TRPs;
multiple first reference signal sets and a first indication, where the first indication is used to indicate a target reference signal set for obtaining delay information among the multiple first reference signal sets, and the multiple first reference signal sets are associated with multiple TRPs; and
one first reference signal set and a second indication, where the second indication is used to indicate a target reference signal for obtaining delay information in the first reference signal set, and the one first reference signal set is associated with multiple TRPs.

The terminal may obtain and feed back delay information based on the configuration of the network-side device. For details, refer to the relevant description in the foregoing method 200.

The network-side device may also use a similar method to configure configuration information for obtaining and feeding back frequency shift information to the terminal. For example, the network-side device configures at least one first reference signal set to the terminal for obtaining frequency shift information.

In a case that the at least one first reference signal set includes multiple first reference signal sets, the multiple first reference signal sets satisfy at least one of the following that:
PCIs associated with the multiple first reference signal sets are not completely the same; and
the multiple first reference signal sets are transmitted in consecutive slots.

In one optional implementation, in a case that the at least one first reference signal set includes multiple first reference signal sets, the method may further include: receiving, by the network-side device, first capability information fed back by the terminal, where the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, and a first symbol interval supported by the terminal, where the first slot interval is a slot interval between two reference signal sets among the multiple reference signal sets, the first symbol interval is a symbol interval between two reference signal sets among the multiple reference signal sets, and the two reference signal sets include one of the following: two adjacent reference signal sets among the multiple reference signal sets, and two reference signal sets with a maximum interval among the multiple reference signal sets.

Optionally, in a case that the at least one first reference signal set includes one first reference signal set, all reference signals in one first reference signal set satisfy at least one of the following that:
PCIs associated with all the reference signals are not completely the same; and
power control offsets associated with all the reference signals are not completely the same.

Optionally, a reference signal in one first reference signal set is not allowed to serve as a quasi-co-location reference signal related to Doppler.

Optionally, a reference signal in the one first reference signal set is not associated with a second reference signal set, where reference signals in the second reference signal set are used to provide Doppler-related quasi-co-location information. That is, reference signals in one first reference signal set cannot be associated with other reference signal sets, and reference signals in the other reference signal sets can be used to provide Doppler-related quasi-co-location information (average delay and/or delay spread).

In one optional implementation, in a case that the at least one first reference signal set includes one first reference signal set, the method may further include:
receiving, by the network-side device, second capability information fed back by the terminal, where the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, where the second slot interval is a slot interval between two reference signals among the multiple reference signals, the second symbol interval is a symbol interval between two reference signals among the multiple reference signals, and the two reference signals include one of the following: two adjacent reference signals among the multiple reference signals, and two reference signals with a maximum interval among the multiple reference signals.

FIG. 6 is another schematic flowchart of a channel state information obtaining method according to an embodiment of the present application. The method 600 may be performed by a network-side device. To be specific, the method may be performed by software or hardware installed on the network-side device. It should be noted that method 600 corresponds to the execution steps of the network-side device in the method 300. The following embodiments only describe the operations of the network-side device. For other unspecified details, reference may be made to the relevant description of the foregoing method 300.

As shown in FIG. 6, the method may include the following steps.

S610. The network-side device sends a target delay indication corresponding to a target CSI report configuration to a terminal, where the target delay indication is associated with at least one target delay adjustment value, and the target CSI report configuration is a CSI report configuration associated with target MTRP CSI.

The terminal may determine at least one target delay adjustment value associated with target MTRP CSI according to the target delay indication, and further obtain target MTRP CSI according to the target delay adjustment value. For details, refer to the relevant description in the foregoing method 300.

In one optional implementation, the network-side device may send a first delay indication to the terminal, where the first delay indication is used to indicate a group of delay adjustment values associated with a target CSI report configuration, and the target CSI report configuration is a CSI report configuration associated with the target MTRP CSI.

Optionally, before the network-side device sends the first delay indication to the terminal, the network-side device may configure multiple groups of delay adjustment values to the terminal, where each group of target delay adjustment values is associated with one CSI report configuration.

In another optional implementation, the network-side device sends a second delay indication to the terminal, where the second delay indication is used to indicate at least one delay adjustment value associated with a target CSI report configuration, and the target CSI report configuration is a CSI report configuration associated with the target MTRP CSI.

Optionally, before the network-side device sends the second delay indication to the terminal, the network-side device may configure multiple delay adjustment values to the terminal, where each delay adjustment value is associated with one CSI report configuration.

S612. The network-side device receives the target MTRP CSI fed back by the terminal.

Through the technical solutions provided in this embodiment of the present application, the network-side device sends a target delay indication to the terminal, so that the network-side device can flexibly adjust the delay range or magnitude corresponding to the delay information associated with the MTRP CSI fed back by the terminal, thereby improving the flexibility of the network-side device.

The method in this embodiment of the present application may also be used to indicate a target frequency shift indication associated with target MTRP CSI to the terminal, where the target frequency shift indication is associated with at least one target frequency shift value.

For example, the network-side device indicates to the terminal, via signaling (not limited to DCI, MAC CE, or RRC signaling), multiple frequency shift values to be considered or adjusted during the calculation of the current MTRP CSI. When obtaining MTRP CSI, the terminal performs pre-compensation based on the multiple frequency shift values to further obtain the MTRP CSI. The correspondence between the CSI-RSs and the frequency shift values may follow the configuration order of the CSI-RSs, that is, the first CSI-RS is associated with the first frequency shift value, the second CSI-RS is associated with the second frequency shift value, and so on. After obtaining the MTRP CSI fed back by the terminal, the network-side device obtains frequency shift information between multiple TRPs based on the multiple frequency shift values.

For example, the network-side device may pre-indicate multiple groups of frequency shift values or multiple frequency shift values. The network-side device then selects or activates at least one group of frequency shift values or at least one frequency shift value through signaling. Through the selection or activation process, the network-side device can flexibly control the frequency shift condition associated with the MTRP CSI.

In one optional implementation, after the network-side device receives the target MTRP CSI fed back by the terminal, the method may further include the following step:
Step 1. The network-side device obtains delay information between MTRPs based on the at least one target delay adjustment value and delay information in the target MTRP CSI. For example, the delay information between MTRPs may be the sum of the target delay adjustment value and the delay information in the target MTRP CSI.

Since in practical applications, the network-side device may configure different target delay indications for different target MTRP CSIs, optionally, before step 1, the method may further include: determining, by the network-side device, the at least one target delay adjustment value associated with the target MTRP CSI. To be specific, the network-side device determines the at least one target delay adjustment value associated with the target MTRP CSI fed back by the terminal.

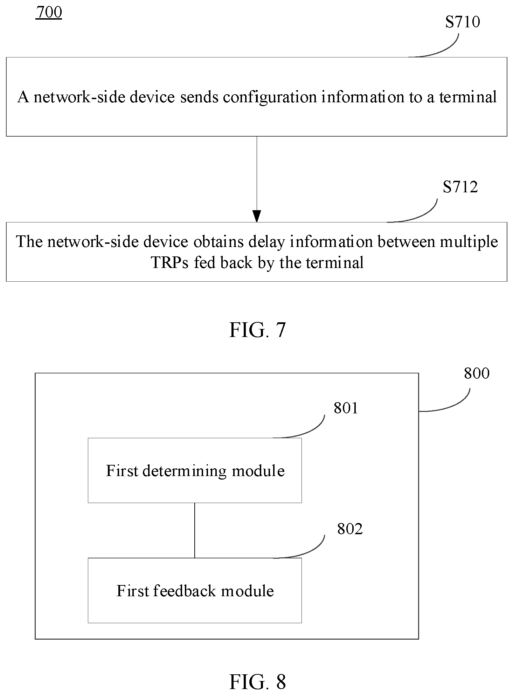

FIG. 7 is a schematic flowchart of a delay information obtaining method according to an embodiment of the present application. The method 700 may be performed by a network-side device. To be specific, the method may be performed by software or hardware installed on the network-side device. It should be noted that method 700 corresponds to the execution steps of the network-side device in the method 400. The following embodiments only describe the operations of the network-side device. For other unspecified details, reference may be made to the relevant description of the foregoing method 300.

As shown in FIG. 7, the method may include the following steps.

S710. The network-side device sends configuration information to a terminal.

The configuration information may include one of the following:
at least one first reference signal set, where the at least one first reference signal set is associated with multiple TRPs;
multiple first reference signal sets and a first indication, where the first indication is used to indicate a target reference signal set for obtaining delay information among the multiple first reference signal sets, and the multiple first reference signal sets are associated with multiple TRPs; and
one first reference signal set and a second indication, where the second indication is used to indicate a target reference signal for obtaining delay information in the first reference signal set, and the first reference signal set is associated with multiple TRPs.

S712. The network-side device obtains delay information between multiple TRPs fed back by the terminal.

After obtaining the configuration information, the terminal may obtain and feed back, based on the configuration information, delay information between multiple TRPs according to the foregoing method 400.

The technical solutions in the foregoing embodiments may also be used to obtain frequency shift information between multiple TRPs. For example, the network-side device configures any one of the above (1) to (3) to the terminal, the terminal obtains and feeds back frequency shift information to the network-side device based on any one of the above (1) to (3), and the network-side device obtains the frequency shift information fed back by the terminal.

Optionally, in a case that the at least one first reference signal set includes multiple first reference signal sets, the multiple first reference signal sets satisfy at least one of the following that:
PCIs associated with the multiple first reference signal sets are not completely the same; and
the multiple first reference signal sets are transmitted in consecutive slots.

In one optional implementation, in a case that the at least one first reference signal set includes multiple first reference signal sets, the method may further include:
receiving, by the network-side device, first capability information fed back by the terminal, where the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, and a first symbol interval supported by the terminal, where the first slot interval is a slot interval between two reference signal sets among the multiple reference signal sets, the first symbol interval is a symbol interval between two reference signal sets among the multiple reference signal sets, and the two reference signal sets include one of the following: two adjacent reference signal sets among the multiple reference signal sets, and two reference signal sets with a maximum interval among the multiple reference signal sets.

In one optional implementation, in a case that the at least one first reference signal set includes one first reference signal set, all reference signals in one first reference signal set satisfy at least one of the following that:
PCIs associated with all the reference signals are not completely the same; and
power control offsets associated with all the reference signals are not completely the same.

In one optional implementation, in a case that the at least one first reference signal set includes one first reference signal set, the method may further include:
receiving, by the network-side device, second capability information fed back by the terminal, where the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, where the second slot interval is a slot interval between two reference signals among the multiple reference signals, the second symbol interval is a symbol interval between two reference signals among the multiple reference signals, and the two reference signals include one of the following: two adjacent reference signals among the multiple reference signals, and two reference signals with a maximum interval among the multiple reference signals.

Through the above technical solutions provided in this embodiment of the present application, the network-side device may configure configuration information for the terminal to perform delay feedback, so that the terminal may obtain and feed back delay information.

The channel state information feedback method provided in the embodiments of the present application can be executed by a channel state information feedback apparatus. In an embodiment of the present application, a channel state information feedback apparatus is taken as an example to execute the channel state information feedback method, to illustrate the channel state information feedback apparatus provided in the embodiments of the present application.

FIG. 8 is a schematic structural diagram of a channel state information feedback apparatus according to an embodiment of the present application. As shown in FIG. 8, the apparatus 800 mainly includes: a first determining module 801 and a first feedback module 802.

In this embodiment of the present application, the first determining module 801 is configured to determine at least one target delay feedback associated with target MTRP CSI to be obtained; and the first feedback module 802 is configured to obtain and feed back the target MTRP CSI based on the at least one target delay feedback.

In one optional implementation, the determining at least one target delay feedback associated with the target MTRP CSI to be obtained includes at least one of the following:
in a case that a first CSI report configuration is associated with multiple CSI reference signals CSI-RSs, the multiple CSI-RSs are used to obtain the target MTRP CSI, and a first association relationship exists between the multiple CSI-RSs and the at least one target delay feedback, determining that the target MTRP CSI is associated with the at least one target delay feedback; and
in a case that a second CSI report configuration is used to obtain the target MTRP CSI, and a second association relationship exists between the second CSI report configuration and the at least one target delay feedback, determining that the target MTRP CSI is associated with the at least one target delay feedback.

In one optional implementation, the first association relationship includes one of the following that:
a CSI-RS set associated with the multiple CSI-RSs is associated with one first tracking reference signal TRS set, and the first TRS set is associated with one target delay feedback;
a CSI-RS set associated with the multiple CSI-RSs is associated with multiple second TRS sets, and the multiple second TRS sets are associated with the at least one target delay feedback;
a CSI-RS set associated with the multiple CSI-RSs is associated with at least one CSI report configuration, and the at least one CSI report configuration is associated with the at least one target delay feedback;
each CSI-RS among the multiple CSI-RSs is associated with a TRS or a TRS set, and the multiple TRSs or multiple TRS sets associated with the multiple CSI-RSs are associated with the at least one target delay feedback; and
each CSI-RS among the multiple CSI-RSs is associated with a physical cell identifier PCI, and the multiple PCIs associated with the multiple CSI-RSs are associated with the at least one target delay feedback.

In one optional implementation, the second association relationship includes one of the following that:
the second CSI report configuration is associated with at least one CSI report configuration, and the at least one CSI report configuration is associated with the at least one target delay feedback; and
the second CSI report configuration is associated with at least one PCI, and the at least one PCI is associated with the at least one target delay feedback.

In one optional implementation, the obtaining the target MTRP CSI based on the at least one target delay feedback includes:
obtaining, based on the at least one target delay feedback, a target precoding matrix indicator PMI in the target MTRP CSI, where the target PMI satisfies one of the following that:
the target PMI does not include a delay indication between multiple reference signals;
the target PMI includes a delay indication of some of the reference signals among the multiple reference signals;
the target PMI includes a delay indication associated with a first reference signal among the multiple reference signals, where the first reference signal is not associated with any delay feedback, and the first reference signal is part of the multiple reference signals;
the target PMI includes a delay indication of a second reference signal among the multiple reference signals, where a time interval from the most recent delay feedback associated with the second reference signal to a first time is greater than a specific value, where the first time includes one of the following: a feedback time of the MTRP CSI, a time corresponding to the CSI reference resource associated with the MTRP CSI, and a CSI reference slot associated with the MTRP CSI, the specific value is a value specified in a protocol or a value indicated by a network or a value fed back by the terminal, and the second reference signal is part of the multiple reference signals;
indication ranges associated with the delay indications of respective reference signals among the multiple reference signals included in the target PMI are not completely the same; and
the target PMI does not include a delay indication of a third reference signal among the multiple reference signals, where the most recent delay feedback associated with the third reference signal occurs after a second time, where the second time includes one of the following: a time corresponding to the CSI reference resource associated with the MTRP CSI, and a CSI reference slot associated with the MTRP CSI, and the third reference signal is part of the multiple reference signals.

In one optional implementation, the obtaining the target MTRP CSI based on the at least one target delay feedback includes:
obtaining, based on the at least one target delay feedback, the target MTRP CSI, where the obtained target MTRP CSI does not include or is not associated with a delay fed back by the terminal in the at least one target delay feedback; and the at least one target delay feedback includes at least one of the following:
first delay feedback, the first delay feedback including: at least one most recent delay feedback prior to a third time; and
second delay feedback, the second delay feedback including: at least one delay feedback associated with a specific reference signal that is most recently received prior to the third time, the specific reference signal being a reference signal used to obtain at least one delay feedback; where
the third time includes one of the following: a time corresponding to the CSI reference resource associated with the target MTRP CSI, and a CSI reference slot associated with the target MTRP CSI.

In one optional implementation, the first feedback module 802 is further configured to perform one of the following:
obtaining and feeding back delay information based on at least one first reference signal set configured by a network-side device;
obtaining and feeding back delay information based on multiple first reference signal sets and a first indication configured by a network-side device, where the first indication is used to indicate a target reference signal set for obtaining delay information in the at least one first reference signal set; and
obtaining and feeding back delay information based on one first reference signal set and a second indication configured by a network-side device, where the second indication is used to indicate a target reference signal for obtaining delay information in the first reference signal set.

In one optional implementation, in a case that the at least one first reference signal set includes multiple first reference signal sets, the multiple first reference signal sets satisfy at least one of the following that:
PCIs associated with the multiple first reference signal sets are not completely the same; and
the multiple first reference signal sets are transmitted in consecutive slots.

In one optional implementation, the first feedback module 802 is further configured to:
feed back first capability information to the network-side device, where the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, and a first symbol interval supported by the terminal, where the first slot interval is a slot interval between two reference signal sets among the multiple reference signal sets, the first symbol interval is a symbol interval between two reference signal sets among the multiple reference signal sets, and the two reference signal sets include one of the following: two adjacent reference signal sets among the multiple reference signal sets, and two reference signal sets with a maximum interval among the multiple reference signal sets.

In one optional implementation, in a case that the at least one first reference signal set includes one first reference signal set, all reference signals in one first reference signal set satisfy at least one of the following that:
PCIs associated with all the reference signals are not completely the same; and
power control offsets associated with all the reference signals are not completely the same.

In one optional implementation, in a case that the at least one first reference signal set includes one first reference signal set, a reference signal in the one first reference signal set is allowed to serve as a delay-related quasi-co-location reference signal.

In one optional implementation, a reference signal in the one first reference signal set is not associated with a second reference signal set, where reference signals in the second reference signal set are used to provide Doppler-related quasi-co-location information.

In one optional implementation, the first feedback module 802 is further configured to: feed back second capability information to the network-side device, where the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, where the second slot interval is a slot interval between two reference signals among the multiple reference signals, the second symbol interval is a symbol interval between two reference signals among the multiple reference signals, and the two reference signals include one of the following: two adjacent reference signals among the multiple reference signals, and two reference signals with a maximum interval among the multiple reference signals.

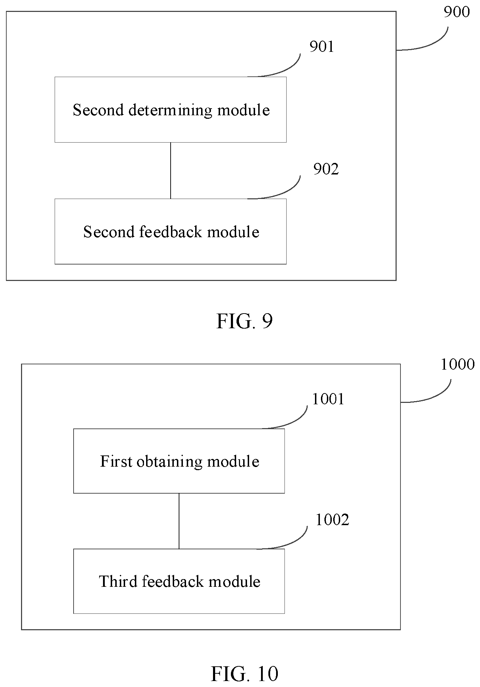

FIG. 9 is another schematic structural diagram of a channel state information feedback apparatus according to an embodiment of the present application. As shown in FIG. 9, the apparatus 900 mainly includes: a second determining module 901 and a second feedback module 902.

In this embodiment of the present application, the second determining module 901 is configured to determine a target delay indication associated with target MTRP CSI to be obtained, where the target delay indication is associated with at least one target delay adjustment value; and the second feedback module 902 is configured to obtain and feed back the target MTRP CSI based on the target delay indication.

In one optional implementation, the determining a target delay indication associated with target MTRP CSI to be obtained includes at least one of the following:
obtaining a first delay indication, where the first delay indication is used to indicate a group of delay adjustment values associated with a target CSI report configuration, and the target CSI report configuration is a CSI report configuration associated with the target MTRP CSI; and
obtaining a second delay indication, where the second delay indication is used to indicate at least one delay adjustment value associated with a target CSI report configuration, and the target CSI report configuration is a CSI report configuration associated with the target MTRP CSI; where
the target delay indication includes at least one of the following: the first delay indication, and the second delay indication.

In one optional implementation, the second determining module 901 is further configured to perform at least one of the following:
obtaining multiple groups of delay adjustment values, where each group of target delay adjustment values is associated with one CSI report configuration; and
obtaining multiple delay adjustment values, where each delay adjustment value is associated with one CSI report configuration.

In one optional implementation, the obtaining the target MTRP CSI based on the target delay indication includes:
obtaining, based on the target delay indication, the target MTRP CSI, where the delay value contained in the obtained target MTRP CSI is a difference between a target delay associated with at least one reference signal and the at least one target delay adjustment value.

FIG. 10 is a schematic structural diagram of a delay information feedback apparatus according to an embodiment of the present application. As shown in FIG. 10, the apparatus 1000 mainly includes: a first obtaining module 1001 and a third feedback module 1002.

In this embodiment of the present application, the first obtaining module 1001 is configured to obtain delay information between multiple TRPs based on a configuration of a network-side device; and the third feedback module 1002 is configured to feed back the obtained delay information between the multiple TRPs; where the configuration of the network-side device includes one of the following: at least one first reference signal set, where the at least one first reference signal set is associated with multiple TRPs; multiple first reference signal sets and a first indication, where the first indication is used to indicate a target reference signal set for obtaining delay information among the multiple first reference signal sets, and the multiple first reference signal sets are associated with multiple TRPs; and one first reference signal set and a second indication, where the second indication is used to indicate a target reference signal for obtaining delay information in the first reference signal set, and the first reference signal set is associated with multiple TRPs.

In one optional implementation, in a case that the at least one first reference signal set includes multiple first reference signal sets, the multiple first reference signal sets satisfy at least one of the following that:
PCIs associated with the multiple first reference signal sets are not completely the same; and
the multiple first reference signal sets are transmitted in consecutive slots.

In one optional implementation, the third feedback module 1002 is further configured to: feed back first capability information to the network-side device, where the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, a first symbol interval supported by the terminal, where the first slot interval is a slot interval between two reference signal sets among the multiple reference signal sets, the first symbol interval is a symbol interval between two reference signal sets among the multiple reference signal sets, and the two reference signal sets include one of the following: two adjacent reference signal sets among the multiple reference signal sets, and two reference signal sets with a maximum interval among the multiple reference signal sets.

In one optional implementation, in a case that the at least one first reference signal set includes one first reference signal set, all reference signals in one first reference signal set satisfy at least one of the following that:
PCIs associated with all the reference signals are not completely the same; and
power control offsets associated with all the reference signals are not completely the same.

In one optional implementation, in a case that the at least one first reference signal set includes one first reference signal set, a reference signal in the one first reference signal set is allowed to serve as a delay-related quasi-co-location reference signal.

In one optional implementation, a reference signal in the one first reference signal set is not associated with a second reference signal set, where reference signals in the second reference signal set are used to provide Doppler-related quasi-co-location information.

In one optional implementation, the third feedback module 1002 is further configured to: the terminal feeds back second capability information to the network-side device, where the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, where the second slot interval is a slot interval between two reference signals among the multiple reference signals, the second symbol interval is a symbol interval between two reference signals among the multiple reference signals, and the two reference signals include one of the following: two adjacent reference signals among the multiple reference signals, and two reference signals with a maximum interval among the multiple reference signals.

The foregoing apparatus in this embodiment of the present application may be an electronic device, for example, an electronic device with an operating system, or may be a component in an electronic device, for example, an integrated circuit or a chip. The electronic device may be a terminal or may be another device except the terminal. For example, the terminal may include but is not limited to the types of the terminal 11 listed above, and the another device may be a server, a network attached storage (Network Attached Storage, NAS), or the like, which are not specifically limited in the embodiments of the present application.

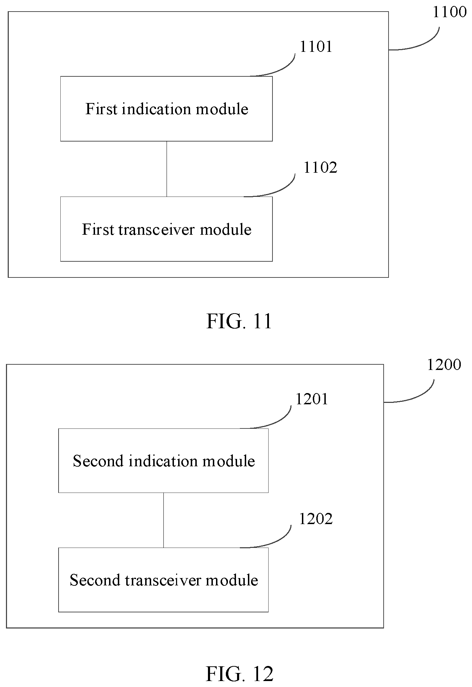

FIG. 11 is a schematic structural diagram of a channel state information obtaining apparatus according to an embodiment of the present application. As shown in FIG. 11, the apparatus 1100 mainly includes: a first indication module 1101, configured to indicate at least one target delay feedback associated with target MTRP CSI to a terminal; and a first transceiver module 1102, configured to receive the target MTRP CSI fed back by the terminal.

In one optional implementation, the apparatus further includes a third determining module, configured to:
determine the at least one target delay feedback associated with the target MTRP CSI; and
obtain delay information between MTRPs based on the at least one target delay feedback and the delay information in the target MTRP CSI.

In one optional implementation, the indicating at least one target delay feedback associated with target MTRP CSI to a terminal includes at least one of the following:
indicating, by means of configuration or establishment of a first association relationship, the at least one target delay feedback associated with the target MTRP CSI to the terminal, where the first association relationship is an association between multiple CSI reference signals CSI-RSs associated with a first CSI report configuration and the at least one target delay feedback, and the multiple CSI-RSs are used to obtain the target MTRP CSI; and
indicating, by means of configuration or establishment of a second association relationship, the at least one target delay feedback associated with the target MTRP CSI to the terminal, where the second association relationship is an association between a second CSI report configuration and the at least one target delay feedback, and the second CSI report is used to obtain the target MTRP CSI.

In one optional implementation, the first association relationship includes one of the following that:
a CSI-RS set associated with the multiple CSI-RSs is associated with one first tracking reference signal TRS set, and the first TRS set is associated with one target delay feedback;
a CSI-RS set associated with the multiple CSI-RSs is associated with multiple second TRS sets, and the multiple second TRS sets are associated with the at least one target delay feedback;
a CSI-RS set associated with the multiple CSI-RSs is associated with at least one CSI report configuration, and the at least one CSI report configuration is associated with the at least one target delay feedback;
each CSI-RS among the multiple CSI-RSs is associated with a TRS or a TRS set, and the multiple TRSs or multiple TRS sets associated with the multiple CSI-RSs are associated with the at least one target delay feedback; and
each CSI-RS among the multiple CSI-RSs is associated with a physical cell identifier PCI, and the multiple PCIs associated with the multiple CSI-RSs are associated with the at least one target delay feedback.

In one optional implementation, the second association relationship includes one of the following that:
the second CSI report configuration is associated with at least one CSI report configuration, and the at least one CSI report configuration is associated with the at least one target delay feedback; and
the second CSI report configuration is associated with at least one PCI, and the at least one PCI is associated with the at least one target delay feedback.

In one optional implementation, the obtaining delay information between MTRPs based on the at least one target delay feedback and the delay information in the target MTRP CSI includes:
obtaining the target PMI in the target MTRP CSI; and
determining, based on the at least one target delay feedback, that the target PMI satisfies one of the following that:
   the target PMI does not include a delay indication between multiple reference signals; and
   the target PMI includes a delay indication of some of the reference signals among the multiple reference signals.

The target PMI includes a delay indication associated with a first reference signal among the multiple reference signals, where the first reference signal is not associated with any delay feedback, and the first reference signal is part of the multiple reference signals;
the target PMI includes a delay indication of a second reference signal among the multiple reference signals, where a time interval from the most recent delay feedback associated with the second reference signal to a first time is greater than a specific value, where the first time includes one of the following: a feedback time of the MTRP CSI, a time corresponding to the CSI reference resource associated with the MTRP CSI, and a CSI reference slot associated with the MTRP CSI, the specific value is a value specified in a protocol or a value indicated by a network, and the second reference signal is part of the multiple reference signals;
indication ranges associated with the delay indications of respective reference signals among the multiple reference signals included in the target PMI are not completely the same;
the target PMI does not include a delay indication of a third reference signal among the multiple reference signals, where the most recent delay feedback associated with the third reference signal occurs after a second time, where the second time includes one of the following: a time corresponding to the CSI reference resource associated with the MTRP CSI, and a CSI reference slot associated with the MTRP CSI, and the third reference signal is part of the multiple reference signals.

In one optional implementation, the determining the at least one target delay feedback associated with the target MTRP CSI includes:
determining that the at least one target delay feedback associated with the target MTRP CSI includes at least one of the following:
first delay feedback, the first delay feedback including: at least one most recent delay feedback prior to a third time; and
second delay feedback, the second delay feedback including: at least one delay feedback associated with a specific reference signal that is most recently received prior to the third time, the specific reference signal being a reference signal used to obtain at least one delay feedback; where
the third time includes one of the following: a time corresponding to the CSI reference resource associated with the target MTRP CSI, and a CSI reference slot associated with the target MTRP CSI.

In one optional implementation, the transceiver module is further configured to obtain the delay information fed back by the terminal.

In one optional implementation, the first indication module is further configured to configure one of the following to the terminal:
at least one first reference signal set, where the at least one first reference signal set is associated with multiple TRPs;
multiple first reference signal sets and a first indication, where the first indication is used to indicate a target reference signal set for obtaining delay information among the multiple first reference signal sets, and the multiple first reference signal sets are associated with multiple TRPs; and
one first reference signal set and a second indication, where the second indication is used to indicate a target reference signal for obtaining delay information in the first reference signal set, and the one first reference signal set is associated with multiple TRPs.

In one optional implementation, in a case that the at least one first reference signal set includes multiple first reference signal sets, the multiple first reference signal sets satisfy at least one of the following that:
PCIs associated with the multiple first reference signal sets are not completely the same; and
the multiple first reference signal sets are transmitted in consecutive slots.

In one optional implementation, the first transceiver module 1102 is further configured to: receive first capability information fed back by the terminal, where the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, a first symbol interval supported by the terminal, where the first slot interval is a slot interval between two reference signal sets among the multiple reference signal sets, the first symbol interval is a symbol interval between two reference signal sets among the multiple reference signal sets, and the two reference signal sets include one of the following: two adjacent reference signal sets among the multiple reference signal sets, and two reference signal sets with a maximum interval among the multiple reference signal sets.

In one optional implementation, in a case that the at least one first reference signal set includes one first reference signal set, all reference signals in one first reference signal set satisfy at least one of the following that:
PCIs associated with all the reference signals are not completely the same; and
power control offsets associated with all the reference signals are not completely the same.

In one optional implementation, the first transceiver module 1102 is further configured to receive second capability information fed back by the terminal, where the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, where the second slot interval is a slot interval between two reference signals among the multiple reference signals, the second symbol interval is a symbol interval between two reference signals among the multiple reference signals, and the two reference signals include one of the following: two adjacent reference signals among the multiple reference signals, and two reference signals with a maximum interval among the multiple reference signals.

FIG. 12 is another schematic structural diagram of a channel state information obtaining apparatus according to an embodiment of the present application. The apparatus 1200 mainly includes: a second indication module 1201, configured to send a target delay indication corresponding to a target CSI report configuration to a terminal, where the target delay indication is associated with at least one target delay adjustment value, and the target CSI report configuration is a CSI report configuration associated with target MTRP CSI; and a second transceiver module 1202, configured to receive the target MTRP CSI fed back by the terminal.

In one optional implementation, the apparatus further includes a fourth determining module, configured to:
determine the at least one target delay adjustment value associated with the target MTRP CSI; and
obtain delay information between MTRPs based on the at least one target delay adjustment value and delay information in the target MTRP CSI.

In one optional implementation, sending a target delay indication corresponding to a target CSI report configuration to a terminal includes at least one of the following:
sending a first delay indication to the terminal, where the first delay indication is used to indicate a group of delay adjustment values associated with a target CSI report configuration, and the target CSI report configuration is a CSI report configuration associated with the target MTRP CSI; and
sending a second delay indication to the terminal, where the second delay indication is used to indicate at least one delay adjustment value associated with a target CSI report configuration, and the target CSI report configuration is a CSI report configuration associated with the target MTRP CSI; where
the target delay indication includes at least one of the following: the first delay indication, and the second delay indication.

In one optional implementation, the second indication module 1201 is further configured to perform at least one of the following:
configuring multiple groups of delay adjustment values to the terminal, where each group of target delay adjustment values is associated with one CSI report configuration; and
configuring multiple delay adjustment values to the terminal, where each delay adjustment value is associated with one CSI report configuration.

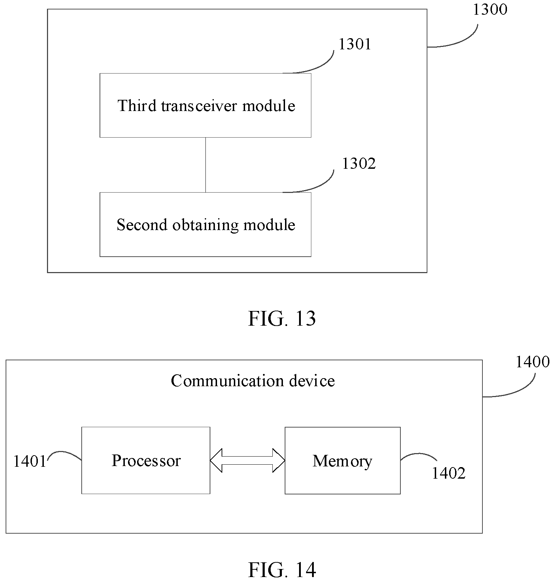

FIG. 13 is a schematic structural diagram of a delay information obtaining apparatus according to an embodiment of the present application. The apparatus 1300 mainly includes: a third transceiver module 1301, configured to send configuration information to a terminal; and a second obtaining module 1302, configured to obtain delay information between multiple TRPs fed back by the terminal; where the configuration information includes one of the following: at least one first reference signal set, where the at least one first reference signal set is associated with multiple TRPs; multiple first reference signal sets and a first indication, where the first indication is used to indicate a target reference signal set for obtaining delay information among the multiple first reference signal sets, and the multiple first reference signal sets are associated with multiple TRPs; and one first reference signal set and a second indication, where the second indication is used to indicate a target reference signal for obtaining delay information in the first reference signal set, and the first reference signal set is associated with multiple TRPs.

In one optional implementation, in a case that the at least one first reference signal set includes multiple first reference signal sets, the multiple first reference signal sets satisfy at least one of the following that:
PCIs associated with the multiple first reference signal sets are not completely the same; and
the multiple first reference signal sets are transmitted in consecutive slots.

In one optional implementation, the third transceiver module 1301 is further configured to receive first capability information fed back by the terminal, where the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, a first symbol interval supported by the terminal, where the first slot interval is a slot interval between two reference signal sets among the multiple reference signal sets, the first symbol interval is a symbol interval between two reference signal sets among the multiple reference signal sets, and the two reference signal sets include one of the following: two adjacent reference signal sets among the multiple reference signal sets, and two reference signal sets with a maximum interval among the multiple reference signal sets.

In one optional implementation, in a case that the at least one first reference signal set includes one first reference signal set, all reference signals in one first reference signal set satisfy at least one of the following that:
PCIs associated with all the reference signals are not completely the same; and
power control offsets associated with all the reference signals are not completely the same.

In one optional implementation, the third transceiver module 1301 is further configured to receive second capability information fed back by the terminal, where the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, where the second slot interval is a slot interval between two reference signals among the multiple reference signals, the second symbol interval is a symbol interval between two reference signals among the multiple reference signals, and the two reference signals include one of the following: two adjacent reference signals among the multiple reference signals, and two reference signals with a maximum interval among the multiple reference signals.

The foregoing apparatus provided in this embodiment of the present application is capable of implementing the processes implemented in the method embodiments in FIG. 2 to FIG. 7, with the same technical effects achieved. To avoid repetition, details are not described herein again.

As shown in FIG. 14, an embodiment of the present application further provides a communication device 1400, including a processor 1401 and a memory 1402, where the memory 1402 stores a program or instructions capable of running on the processor 1401. For example, when the communication device 1400 is a terminal, the program or instructions are executed by the processor 1401 to implement the steps of the method 200, 300, or 400 embodiment described above, with the same technical effects achieved. When the communication device 1400 is a network-side device, the program or instructions are executed by the processor 1401 to implement the steps of the method 500, 600, or 700 embodiment described above, with the same technical effects achieved. To avoid repetition, details are not described herein again.

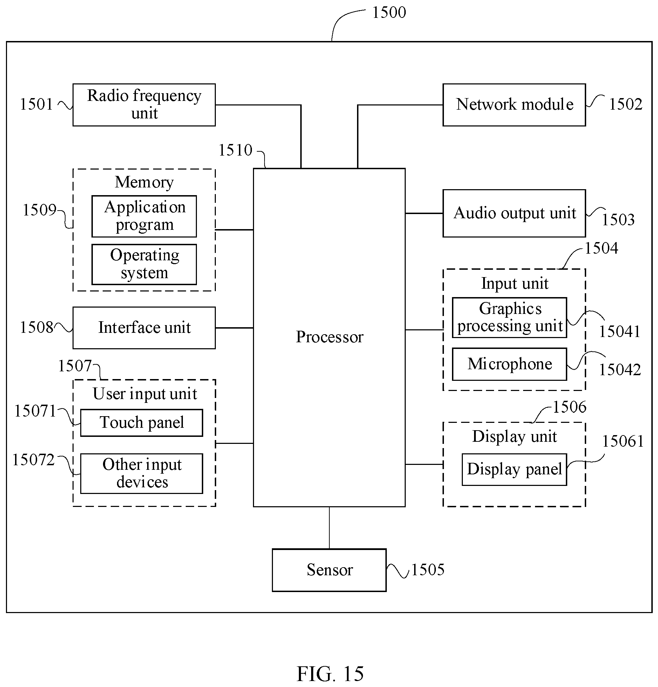

An embodiment of the present application further provides a terminal including a processor and a communication interface, where the communication interface is coupled to the processor, and the processor is configured to run a program or instructions so as to implement the steps of the method embodiment as shown in FIG. 2 to FIG. 4. This terminal embodiment corresponds to the foregoing method embodiment on the terminal side. All implementations in the foregoing method embodiment may be applicable to this terminal embodiment, with the same technical effects achieved. Specifically, FIG. 15 is a schematic structural diagram of hardware of a terminal for implementing embodiments of the present application.

The terminal 1500 includes, but is not limited to, at least some of components such as a radio frequency unit 1501, a network module 1502, an audio output unit 1503, an input unit 1504, a sensor 1505, a display unit 1506, a user input unit 1507, an interface unit 1508, a memory 1509, and a processor 1510.

Persons skilled in the art can understand that the terminal 1500 may further include a power supply (for example, a battery) for supplying power to the components. The power supply may be logically connected to the processor 1510 through a power management system. In this way, functions such as charge management, discharge management, and power consumption management are implemented by using the power management system. The structure of the terminal shown in FIG. 15 does not constitute any limitation on the terminal. The terminal may include more or fewer components than shown in the figure, or a combination of some components, or the components disposed differently. Details are not described herein again.

It should be understood that in this embodiment of the present application, the input unit 1504 may include a graphics processing unit (Graphics Processing Unit, GPU) 15041 and a microphone 15042. The graphics processing unit 15041 processes image data of a static picture or a video that is obtained by an image capture apparatus (for example, a camera) in a video capture mode or an image capture mode. The display unit 1506 may include a display panel 15061, and the display panel 15061 may be configured in a form of a liquid crystal display, an organic light-emitting diode, and the like. The user input unit 1507 includes at least one of a touch panel 15071 and other input devices 15072. The touch panel 15071 is also referred to as a touchscreen. The touch panel 15071 may include two parts: a touch detection apparatus and a touch controller. The other input devices 15072 may include but are not limited to a physical keyboard, a function key (for example, a volume control key or a power on/off key), a trackball, a mouse, a joystick, and the like. Details are not described herein.

In this embodiment, after receiving downlink data from a network-side device, the radio frequency unit 1501 may transmit the downlink data to the processor 1510 for processing. In addition, the radio frequency unit 1501 may transmit uplink data to the network-side device. Generally, the radio frequency unit 1501 includes but is not limited to an antenna, an amplifier, a transceiver, a coupler, a low noise amplifier, and a duplexer.

The memory 1509 may be configured to store software programs or instructions and various data. The memory 1509 may include first storage area for storing programs or instructions and a second storage area for storing data. The first storage area may store an operating system, an application program or instruction required by at least one function (for example, a sound playback function or an image playback function), and the like. In addition, the memory 1509 may include either a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1509 in this embodiment of the present application includes but is not limited to these and any other suitable types of memories.

The processor 1510 may include one or more processing units. Optionally, an application processor and a modem processor are integrated in the processor 1510. The application processor primarily processes operations relating to an operating system, user interfaces, application programs, and the like. The modem processor primarily processes radio communication signals, for example, being a baseband processor. It can be understood that the modem processor may alternatively be not integrated in the processor 1510.

The processor 1510 is configured to:
determine at least one target delay feedback associated with target multi-transmission reception point (multi-TRP, MTRP) CSI to be obtained; and obtain and feed back the target MTRP CSI based on the at least one target delay feedback; or
determine a target delay indication associated with target MTRP CSI to be obtained, where the target delay indication is associated with at least one target delay adjustment value; and obtain and feed back the target MTRP CSI based on the target delay indication; or
obtain delay information between multiple TRPs based on a configuration of a network-side device; and feed back the obtained delay information between the multiple TRPs; where the configuration of the network-side device includes one of the following: at least one first reference signal set, where the at least one first reference signal set is associated with multiple TRPs; multiple first reference signal sets and a first indication, where the first indication is used to indicate a target reference signal set for obtaining delay information among the multiple first reference signal sets, and the multiple first reference signal sets are associated with multiple TRPs; and one first reference signal set and a second indication, where the second indication is used to indicate a target reference signal for obtaining delay information in the first reference signal set, and the first reference signal set is associated with multiple TRPs.

It can be understood that the implementation processes of the various implementations mentioned in this embodiment may refer to the relevant descriptions of the embodiments of the methods 200 to 400, with the same or corresponding technical effects achieved. To avoid repetition, details are not described herein again.

An embodiment of the present application further provides a network-side device, including a processor and a communication interface, where the communication interface is coupled to the processor, and the processor is configured to run a program or instructions so as to implement the steps of the method embodiment as shown in FIG. 5 to FIG. 7. The network-side device embodiment corresponds to the foregoing network-side device method embodiment. All implementations in the foregoing method embodiment may be applicable to the network-side device embodiment, with the same technical effect achieved.

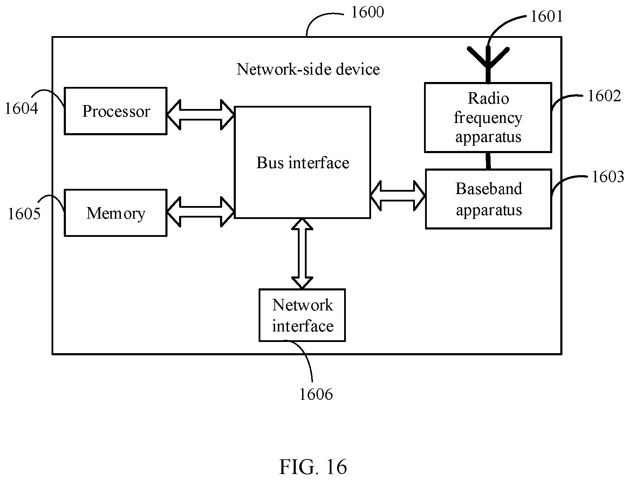

Specifically, an embodiment of the present application further provides a network-side device. As shown in FIG. 16, the network-side device 1600 includes: an antenna 1601, a radio frequency apparatus 1602, a baseband apparatus 1603, a processor 1604, and a memory 1605. The antenna 1601 is connected to the radio frequency apparatus 1602. In an uplink direction, the radio frequency apparatus 1602 receives information through the antenna 1601, and sends the received information to the baseband apparatus 1603 for processing. In a downlink direction, the baseband apparatus 1603 processes to-be-sent information, and sends the information to the radio frequency apparatus 1602; and the radio frequency apparatus 1602 processes the received information and then sends the information using the antenna 1601.

The method performed by the network-side device in the foregoing embodiment may be implemented in the baseband apparatus 1603, and the baseband apparatus 1603 includes a baseband processor.

The baseband apparatus 1603 may include, for example, at least one baseband board, where a plurality of chips are disposed on the baseband board. As shown in FIG. 16, one of the chips is, for example, the baseband processor, and connected to the memory 1605 through a bus interface, to invoke the program in the memory 1605 to perform the operations of the network device shown in the foregoing method embodiment.

The network-side device may further include a network interface 1606, where the interface is, for example, a common public radio interface (Common Public Radio Interface, CPRI).

Specifically, the network-side device 1600 in this embodiment of the present application further includes: instructions or a program stored in the memory 1605 and capable of running on the processor 1604. The processor 1604 invokes the instructions or program in the memory 1605 to execute the method executed by the modules shown in FIG. 11 to FIG. 13, with the same technical effects achieved. To avoid repetition, details are not described herein again.

An embodiment of the present application further provide a readable storage medium, where the readable storage medium stores a program or instructions, and when the program or instructions are executed by a processor, the processes of the method embodiment shown in FIG. 2 to FIG. 7 are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of the present application further provides a chip. The chip includes a processor and a communication interface. The communication interface is coupled to the processor. The processor is configured to run a program or instructions, to implement the processes of the method embodiments shown in FIG. 2 to FIG. 7, with the same technical effects achieved. To avoid repetition, details are not described herein again.

It should be understood that the chip mentioned in this embodiment of the present application may also be referred to as a system-on-chip, a system chip, a system-on-a-chip, or a system on a chip, or the like.

An embodiment of the present application further provides a computer program/program product, where the computer program/program product is stored in a storage medium, and the computer program/program product is executed by at least one processor to implement the processes of the method embodiments shown in FIG. 2 to FIG. 7, with the same technical effects achieved. To avoid repetition, details are not described herein again.

An embodiment of the present application further provides a communication system, including a terminal and a network-side device, where the terminal may be configured to execute the steps of the methods 200 to 400 as described above, and the network-side device may be configured to execute the steps of the foregoing methods 500 to 700.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of the present application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may also be implemented by hardware. This computer software product is stored in a storage medium (such as ROM, RAM, magnetic disk, or optical disk) and includes a number of instructions to enable the terminal or the network-side device to execute the methods described in the various embodiments of the present application.

The foregoing describes the embodiments of the present application with reference to the accompanying drawings. However, the present application is not limited to the foregoing specific embodiments. The foregoing specific embodiments are merely illustrative rather than restrictive. As instructed by the present application, persons of ordinary skill in the art may further devise many forms of embodiments without departing from principles of the present application and the protection scope of the claims, and all these embodiments fall within the protection scope of the present application.

## Claims

1. A channel state information feedback method, comprising:
determining, by a terminal, at least one target delay feedback associated with target multi-transmission reception point MTRP channel state information CSI to be obtained; and
obtaining and feeding back, by the terminal, the target MTRP CSI based on the at least one target delay feedback.

2. The method according to claim 1, wherein the determining, by a terminal, at least one target delay feedback associated with target MTRP CSI to be obtained comprises at least one of the following:
in a case that a first CSI report configuration is associated with multiple CSI reference signals CSI-RSs, the multiple CSI-RSs are used to obtain the target MTRP CSI, and a first association relationship exists between the multiple CSI-RSs and the at least one target delay feedback, determining that the target MTRP CSI is associated with the at least one target delay feedback; and
in a case that a second CSI report configuration is used to obtain the target MTRP CSI, and a second association relationship exists between the second CSI report configuration and the at least one target delay feedback, determining that the target MTRP CSI is associated with the at least one target delay feedback.

3. The method according to claim 2, wherein the first association relationship comprises one of the following that:
a CSI-RS set associated with the multiple CSI-RSs is associated with one first tracking reference signal TRS set, and the first TRS set is associated with one target delay feedback;
a CSI-RS set associated with the multiple CSI-RSs is associated with multiple second TRS sets, and the multiple second TRS sets are associated with the at least one target delay feedback;
a CSI-RS set associated with the multiple CSI-RSs is associated with at least one CSI report configuration, and the at least one CSI report configuration is associated with the at least one target delay feedback;
each CSI-RS among the multiple CSI-RSs is associated with a TRS or a TRS set, and the multiple TRSs or multiple TRS sets associated with the multiple CSI-RSs are associated with the at least one target delay feedback; and
each CSI-RS among the multiple CSI-RSs is associated with a physical cell identifier PCI, and the multiple PCIs associated with the multiple CSI-RSs are associated with the at least one target delay feedback.

4. The method according to claim 2, wherein the second association relationship comprises one of the following that:
the second CSI report configuration is associated with at least one CSI report configuration, and the at least one CSI report configuration is associated with the at least one target delay feedback; and
the second CSI report configuration is associated with at least one PCI, and the at least one PCI is associated with the at least one target delay feedback.

5. The method according to any one of claims 1 to 4, wherein the obtaining, by the terminal, the target MTRP CSI based on the at least one target delay feedback comprises:
obtaining, by the terminal based on the at least one target delay feedback, a target precoding matrix indicator PMI in the target MTRP CSI, wherein the target PMI satisfies one of the following that:
the target PMI does not comprise a delay indication between multiple reference signals;
the target PMI comprises delay indications of part of multiple reference signals;
the target PMI comprises a delay indication associated with a first reference signal among the multiple reference signals, wherein the first reference signal is not associated with any delay feedback, and the first reference signal is part of the multiple reference signals;
the target PMI comprises a delay indication of a second reference signal among the multiple reference signals, wherein a time interval from the most recent delay feedback associated with the second reference signal to a first time is greater than a specific value, the first time comprises one of the following: a feedback time of the MTRP CSI, a time corresponding to the CSI reference resource associated with the MTRP CSI, and a CSI reference slot associated with the MTRP CSI, the specific value is a value specified in a protocol or a value indicated by a network or a value fed back by the terminal, and the second reference signal is part of the multiple reference signals;
indication ranges associated with the delay indications of respective reference signals among the multiple reference signals comprised in the target PMI are not completely the same; and
the target PMI does not comprise a delay indication of a third reference signal among the multiple reference signals, wherein the most recent delay feedback associated with the third reference signal occurs after a second time, wherein the second time comprises one of the following: a time corresponding to the CSI reference resource associated with the MTRP CSI, and a CSI reference slot associated with the MTRP CSI, and the third reference signal is part of the multiple reference signals.

6. The method according to any one of claims 2 to 5, wherein the obtaining, by the terminal, the target MTRP CSI based on the at least one target delay feedback comprises:
obtaining, by the terminal based on the at least one target delay feedback, the target MTRP CSI, wherein the obtained target MTRP CSI does not comprise or is not associated with a delay fed back by the terminal in the at least one target delay feedback; and the at least one target delay feedback comprises at least one of the following:
first delay feedback, the first delay feedback comprising: at least one most recent delay feedback prior to a third time; and
second delay feedback, the second delay feedback comprising: at least one delay feedback associated with a specific reference signal that is most recently received prior to the third time, the specific reference signal being a reference signal used to obtain at least one delay feedback; wherein
the third time comprises one of the following: a time corresponding to the CSI reference resource associated with the target MTRP CSI, and a CSI reference slot associated with the target MTRP CSI.

7. The method according to any one of claims 1 to 6, wherein before the determining, by a terminal, at least one target delay feedback associated with the target MTRP CSI to be obtained, the method further comprises one of the following:
obtaining and feeding back, by the terminal, delay information based on at least one first reference signal set configured by a network-side device;
obtaining and feeding back, by the terminal, delay information based on multiple first reference signal sets and a first indication configured by the network-side device, wherein the first indication is used to indicate a target reference signal set for obtaining delay information in the at least one first reference signal set; and
obtaining and feeding back, by the terminal, delay information based on one first reference signal set and a second indication configured by the network-side device, wherein the second indication is used to indicate a target reference signal for obtaining delay information in the first reference signal set.

8. The method according to claim 7, wherein in a case that the at least one first reference signal set comprises multiple first reference signal sets, the multiple first reference signal sets satisfy at least one of the following that:
PCIs associated with the multiple first reference signal sets are not completely the same; and
the multiple first reference signal sets are transmitted in consecutive slots.

9. The method according to claim 7, wherein in a case that the at least one first reference signal set comprises multiple first reference signal sets, the method further comprises:
feeding back, by the terminal, first capability information to the network-side device, wherein the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, and a first symbol interval supported by the terminal, wherein the first slot interval is a slot interval between two reference signal sets among the multiple reference signal sets, the first symbol interval is a symbol interval between two reference signal sets among the multiple reference signal sets, and the two reference signal sets comprise one of the following: two adjacent reference signal sets among the multiple reference signal sets, and two reference signal sets with a maximum interval among the multiple reference signal sets.

10. The method according to claim 7, wherein in a case that the at least one first reference signal set comprises one first reference signal set, all reference signals in one first reference signal set satisfy at least one of the following that:
PCIs associated with all the reference signals are not completely the same; and
power control offsets associated with all the reference signals are not completely the same.

11. The method according to claim 7, wherein in a case that the at least one first reference signal set comprises one first reference signal set, a reference signal in the one first reference signal set is allowed to serve as a delay-related quasi-co-location reference signal.

12. The method according to claim 11, wherein the reference signal in the one first reference signal set is not associated with a second reference signal set, wherein reference signals in the second reference signal set are used to provide Doppler-related quasi-co-location information.

13. The method according to claim 7, wherein in a case that the at least one first reference signal set comprises one first reference signal set, the method further comprises:
feeding back, by the terminal, second capability information to the network-side device, wherein the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, wherein the second slot interval is a slot interval between two reference signals among the multiple reference signals, the second symbol interval is a symbol interval between two reference signals among the multiple reference signals, and the two reference signals comprise one of the following: two adjacent reference signals among the multiple reference signals, and two reference signals with a maximum interval among the multiple reference signals.

14. A channel state information feedback method, comprising:
determining, by a terminal, a target delay indication associated with target MTRP CSI to be obtained, wherein the target delay indication is associated with at least one target delay adjustment value; and
obtaining and feeding back, by the terminal, the target MTRP CSI based on the target delay indication.

15. The method according to claim 14, wherein the determining, by a terminal, a target delay indication associated with target MTRP CSI to be obtained comprises at least one of the following:
obtaining, by the terminal, a first delay indication, wherein the first delay indication is used to indicate a group of delay adjustment values associated with a target CSI report configuration, and the target CSI report configuration is a CSI report configuration associated with the target MTRP CSI; and
obtaining, by the terminal, a second delay indication, wherein the second delay indication is used to indicate at least one delay adjustment value associated with a target CSI report configuration, and the target CSI report configuration is a CSI report configuration associated with the target MTRP CSI; wherein
the target delay indication comprises at least one of the following: the first delay indication, and the second delay indication.

16. The method according to claim 15, wherein before the determining, by a terminal, a target delay indication associated with target MTRP CSI to be obtained, the method further comprises at least one of the following:
obtaining, by the terminal, multiple groups of delay adjustment values, wherein each group of target delay adjustment values is associated with one CSI report configuration; and
obtaining, by the terminal, multiple delay adjustment values, wherein each delay adjustment value is associated with one CSI report configuration.

17. The method according to any one of claims 14 to 16, wherein the obtaining, by the terminal, the target MTRP CSI based on the target delay indication comprises:
obtaining, by the terminal based on the target delay indication, the target MTRP CSI, wherein the delay value contained in the obtained target MTRP CSI is a difference between a target delay associated with at least one reference signal and the at least one target delay adjustment value.

18. A delay information feedback method, comprising:
obtaining and feeding back, by a terminal, delay information between multiple TRPs based on a configuration of a network-side device; wherein
the configuration of the network-side device comprises one of the following:
at least one first reference signal set, wherein the at least one first reference signal set is associated with multiple TRPs;
multiple first reference signal sets and a first indication, wherein the first indication is used to indicate a target reference signal set for obtaining delay information among the multiple first reference signal sets, and the multiple first reference signal sets are associated with multiple TRPs; and
one first reference signal set and a second indication, wherein the second indication is used to indicate a target reference signal for obtaining delay information in the first reference signal set, and the first reference signal set is associated with multiple TRPs.

19. The method according to claim 18, wherein in a case that the at least one first reference signal set comprises multiple first reference signal sets, the multiple first reference signal sets satisfy at least one of the following that:
PCIs associated with the multiple first reference signal sets are not completely the same; and
the multiple first reference signal sets are transmitted in consecutive slots.

20. The method according to claim 18, wherein in a case that the at least one first reference signal set comprises multiple first reference signal sets, the method further comprises:
feeding back, by the terminal, first capability information to the network-side device, wherein the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, and a first symbol interval supported by the terminal, wherein the first slot interval is a slot interval between two reference signal sets among the multiple reference signal sets, the first symbol interval is a symbol interval between two reference signal sets among the multiple reference signal sets, and the two reference signal sets comprise one of the following: two adjacent reference signal sets among the multiple reference signal sets, and two reference signal sets with a maximum interval among the multiple reference signal sets.

21. The method according to claim 18, wherein in a case that the at least one first reference signal set comprises one first reference signal set, all reference signals in one first reference signal set satisfy at least one of the following that:
PCIs associated with all the reference signals are not completely the same; and
power control offsets associated with all the reference signals are not completely the same.

22. The method according to claim 21, wherein in a case that the at least one first reference signal set comprises one first reference signal set, a reference signal in the one first reference signal set is allowed to serve as a delay-related quasi-co-location reference signal.

23. The method according to claim 22, wherein a reference signal in the one first reference signal set is not associated with a second reference signal set, wherein reference signals in the second reference signal set are used to provide Doppler-related quasi-co-location information.

24. The method according to claim 21, wherein in a case that the at least one first reference signal set comprises one first reference signal set, the method further comprises:
feeding back, by the terminal, second capability information to the network-side device, wherein the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, wherein the second slot interval is a slot interval between two reference signals among the multiple reference signals, the second symbol interval is a symbol interval between two reference signals among the multiple reference signals, and the two reference signals comprise one of the following: two adjacent reference signals among the multiple reference signals, and two reference signals with a maximum interval among the multiple reference signals.

25. A channel state information obtaining method, comprising:
indicating, by a network-side device, at least one target delay feedback associated with target MTRP CSI to a terminal; and
receiving, by the network-side device, the target MTRP CSI fed back by the terminal.

26. The method according to claim 25, wherein after the receiving, by the network-side device, the target MTRP CSI fed back by the terminal, the method further comprises:
obtaining, by the network-side device, delay information between MTRPs based on the at least one target delay feedback and the delay information in the target MTRP CSI.

27. The method according to claim 25 or 26, wherein the indicating, by a network-side device, at least one target delay feedback associated with target MTRP CSI to a terminal comprises at least one of the following:
indicating, by the network-side device by means of configuration or establishment of a first association relationship, the at least one target delay feedback associated with the target MTRP CSI to the terminal, wherein the first association relationship is an association between multiple CSI reference signals CSI-RSs associated with a first CSI report configuration and the at least one target delay feedback, and the multiple CSI-RSs are used to obtain the target MTRP CSI; and
indicating, by the network-side device by means of configuration or establishment of a second association relationship, the at least one target delay feedback associated with the target MTRP CSI to the terminal, wherein the second association relationship is an association between a second CSI report configuration and the at least one target delay feedback, and the second CSI report is used to obtain the target MTRP CSI.

28. The method according to claim 26, wherein the obtaining, by the network-side device, delay information between MTRPs based on the at least one target delay feedback and the delay information in the target MTRP CSI comprises:
obtaining, by the network-side device, the target PMI in the target MTRP CSI; and
determining, by the network-side device based on the at least one target delay feedback, that the target PMI satisfies one of the following that:
the target PMI does not comprise a delay indication between multiple reference signals;
the target PMI comprises a delay indication of some of the reference signals among the multiple reference signals;
the target PMI comprises a delay indication associated with a first reference signal among the multiple reference signals, wherein the first reference signal is not associated with any delay feedback, and the first reference signal is part of the multiple reference signals;
the target PMI comprises a delay indication of a second reference signal among the multiple reference signals, wherein a time interval from the most recent delay feedback associated with the second reference signal to a first time is greater than a specific value, the first time comprises one of the following: a feedback time of the MTRP CSI, a time corresponding to the CSI reference resource associated with the MTRP CSI, and a CSI reference slot associated with the MTRP CSI, the specific value is a value specified in a protocol or a value indicated by a network, and the second reference signal is part of the multiple reference signals;
indication ranges associated with the delay indications of respective reference signals among the multiple reference signals comprised in the target PMI are not completely the same; and
the target PMI does not comprise a delay indication of a third reference signal among the multiple reference signals, wherein the most recent delay feedback associated with the third reference signal occurs after a second time, wherein the second time comprises one of the following: a time corresponding to the CSI reference resource associated with the MTRP CSI, and a CSI reference slot associated with the MTRP CSI, and the third reference signal is part of the multiple reference signals.

29. The method according to claim 26, wherein the determining, by the network-side device, the at least one target delay feedback associated with the target MTRP CSI comprises:
determining, by the network-side device, that the at least one target delay feedback associated with the target MTRP CSI comprises at least one of the following:
first delay feedback, the first delay feedback comprising: at least one most recent delay feedback prior to a third time; and
second delay feedback, the second delay feedback comprising: at least one delay feedback associated with a specific reference signal that is most recently received prior to the third time, the specific reference signal being a reference signal used to obtain at least one delay feedback; wherein
the third time comprises one of the following: a time corresponding to the CSI reference resource associated with the target MTRP CSI, and a CSI reference slot associated with the target MTRP CSI.

30. The method according to any one of claims 25 to 29, wherein before the receiving, by the network-side device, the target MTRP CSI fed back by the terminal, the method further comprises:
obtaining, by the network-side device, delay information fed back by the terminal.

31. The method according to claim 30, wherein before the obtaining, by the network-side device, delay information fed back by the terminal, the method further comprises:
configuring, by the network-side device, one of the following to the terminal:
at least one first reference signal set, wherein the at least one first reference signal set is associated with multiple TRPs;
multiple first reference signal sets and a first indication, wherein the first indication is used to indicate a target reference signal set for obtaining delay information among the multiple first reference signal sets, and the multiple first reference signal sets are associated with multiple TRPs; and
one first reference signal set and a second indication, wherein the second indication is used to indicate a target reference signal for obtaining delay information in the first reference signal set, and the one first reference signal set is associated with multiple TRPs.

32. The method according to claim 31, wherein in a case that the at least one first reference signal set comprises multiple first reference signal sets, the method further comprises:
receiving, by the network-side device, first capability information fed back by the terminal, wherein the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, and a first symbol interval supported by the terminal, wherein the first slot interval is a slot interval between two reference signal sets among the multiple reference signal sets, the first symbol interval is a symbol interval between two reference signal sets among the multiple reference signal sets, and the two reference signal sets comprise one of the following: two adjacent reference signal sets among the multiple reference signal sets, and two reference signal sets with a maximum interval among the multiple reference signal sets.

33. The method according to claim 31, wherein in a case that the at least one first reference signal set comprises one first reference signal set, the method further comprises:
receiving, by the network-side device, second capability information fed back by the terminal, wherein the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, wherein the second slot interval is a slot interval between two reference signals among the multiple reference signals, the second symbol interval is a symbol interval between two reference signals among the multiple reference signals, and the two reference signals comprise one of the following: two adjacent reference signals among the multiple reference signals, and two reference signals with a maximum interval among the multiple reference signals.

34. A channel state information obtaining method, comprising:
sending, by a network-side device, a target delay indication corresponding to a target CSI report configuration to a terminal, wherein the target delay indication is associated with at least one target delay adjustment value, and the target CSI report configuration is a CSI report configuration associated with target MTRP CSI; and
receiving, by the network-side device, the target MTRP CSI fed back by the terminal.

35. The method according to claim 34, wherein after the receiving, by the network-side device, the target MTRP CSI fed back by the terminal, the method further comprises:
obtaining, by the network-side device, delay information between MTRPs based on the at least one target delay adjustment value and delay information in the target MTRP CSI.

36. The method according to claim 34 or 35, wherein the sending, by a network-side device, a target delay indication corresponding to a target CSI report configuration to a terminal comprises at least one of the following:
sending a first delay indication to the terminal, wherein the first delay indication is used to indicate a group of delay adjustment values associated with a target CSI report configuration, and the target CSI report configuration is a CSI report configuration associated with the target MTRP CSI; and
sending a second delay indication to the terminal, wherein the second delay indication is used to indicate at least one delay adjustment value associated with a target CSI report configuration, and the target CSI report configuration is a CSI report configuration associated with the target MTRP CSI; wherein
the target delay indication comprises at least one of the following: the first delay indication, and the second delay indication.

37. The method according to claim 36, wherein before the sending, by a network-side device, a target delay indication corresponding to a target CSI report configuration to a terminal, the method further comprises at least one of the following:
configuring multiple groups of delay adjustment values to the terminal, wherein each group of target delay adjustment values is associated with one CSI report configuration; and
configuring multiple delay adjustment values to the terminal, wherein each delay adjustment value is associated with one CSI report configuration.

38. A delay information obtaining method, comprising:
sending, by a network-side device, configuration information to a terminal; and
obtaining, by the network-side device, delay information between multiple TRPs fed back by the terminal; wherein
the configuration information comprises one of the following:
at least one first reference signal set, wherein the at least one first reference signal set is associated with multiple TRPs;
multiple first reference signal sets and a first indication, wherein the first indication is used to indicate a target reference signal set for obtaining delay information among the multiple first reference signal sets, and the multiple first reference signal sets are associated with multiple TRPs; and
one first reference signal set and a second indication, wherein the second indication is used to indicate a target reference signal for obtaining delay information in the first reference signal set, and the first reference signal set is associated with multiple TRPs.

39. The method according to claim 38, wherein in a case that the at least one first reference signal set comprises multiple first reference signal sets, the method further comprises:
receiving, by the network-side device, first capability information fed back by the terminal, wherein the first capability information is used to indicate at least one of the following that: whether the terminal supports multiple reference signal sets being associated with a same slot for transmission, whether the terminal supports multiple reference signal sets being associated with a same symbol for transmission, a first slot interval supported by the terminal, and a first symbol interval supported by the terminal, wherein the first slot interval is a slot interval between two reference signal sets among the multiple reference signal sets, the first symbol interval is a symbol interval between two reference signal sets among the multiple reference signal sets, and the two reference signal sets comprise one of the following: two adjacent reference signal sets among the multiple reference signal sets, and two reference signal sets with a maximum interval among the multiple reference signal sets.

40. The method according to claim 39, wherein in a case that the at least one first reference signal set comprises one first reference signal set, the method further comprises:
receiving, by the network-side device, second capability information fed back by the terminal, wherein the second capability information is used to indicate at least one of the following that: whether the terminal supports multiple reference signals being associated with a same slot for transmission, whether the terminal supports multiple reference signals being associated with a same symbol for transmission, a second slot interval supported by the terminal, and a second symbol interval supported by the terminal, wherein the second slot interval is a slot interval between two reference signals among the multiple reference signals, the second symbol interval is a symbol interval between two reference signals among the multiple reference signals, and the two reference signals comprise one of the following: two adjacent reference signals among the multiple reference signals, and two reference signals with a maximum interval among the multiple reference signals.

41. A channel state information feedback apparatus, comprising:
a first determining module, configured to determine at least one target delay feedback associated with target MTRP CSI to be obtained; and
a first feedback module, configured to obtain and feed back the target MTRP CSI based on the at least one target delay feedback.

42. A channel state information feedback apparatus, comprising:
a second determining module, configured to determine a target delay indication associated with target MTRP CSI to be obtained, wherein the target delay indication is associated with at least one target delay adjustment value; and
a second feedback module, configured to obtain and feed back the target MTRP CSI based on the target delay indication.

43. A delay information feedback apparatus, comprising:
a first obtaining module, configured to obtain delay information between multiple TRPs based on a configuration of a network-side device; and
a third feedback module, configured to feed back the obtained delay information between the multiple TRPs; wherein
the configuration of the network-side device comprises one of the following:
at least one first reference signal set, wherein the at least one first reference signal set is associated with multiple TRPs;
multiple first reference signal sets and a first indication, wherein the first indication is used to indicate a target reference signal set for obtaining delay information among the multiple first reference signal sets, and the multiple first reference signal sets are associated with multiple TRPs; and
one first reference signal set and a second indication, wherein the second indication is used to indicate a target reference signal for obtaining delay information in the first reference signal set, and the first reference signal set is associated with multiple TRPs.

44. A channel state information obtaining apparatus, comprising:
a first indication module, configured to indicate at least one target delay feedback associated with the target MTRP CSI to a terminal; and
a first transceiver module, configured to receive the target MTRP CSI fed back by the terminal.

45. A channel state information obtaining apparatus, comprising:
a second indication module, configured to send a target delay indication corresponding to a target CSI report configuration to a terminal, wherein the target delay indication is associated with at least one target delay adjustment value, and the target CSI report configuration is a CSI report configuration associated with target MTRP CSI; and
a second transceiver module, configured to receive the target MTRP CSI fed back by the terminal.

46. A delay information obtaining apparatus, comprising:
a third transceiver module, configured to send configuration information to a terminal; and
a second obtaining module, configured to obtain delay information between multiple TRPs fed back by the terminal; wherein
the configuration information comprises one of the following:
at least one first reference signal set, wherein the at least one first reference signal set is associated with multiple TRPs;
multiple first reference signal sets and a first indication, wherein the first indication is used to indicate a target reference signal set for obtaining delay information among the multiple first reference signal sets, and the multiple first reference signal sets are associated with multiple TRPs; and
one first reference signal set and a second indication, wherein the second indication is used to indicate a target reference signal for obtaining delay information in the first reference signal set, and the first reference signal set is associated with multiple TRPs.

47. A terminal, comprising a processor and a memory, wherein the memory stores a program or instructions executable on the processor, and when the program or instructions are executed by the processor, the steps of the method according to any one of claims 1 to 24 are implemented.

48. A network-side device, comprising a processor and a memory, wherein the memory stores a program or instructions executable on the processor, and when the program or instructions are executed by the processor, the steps of the method according to any one of claims 25 to 40 are implemented.

49. A readable storage medium, wherein the readable storage medium stores a program or instructions, and when the program or instructions are executed by a processor, the steps of the method according to any one of claims 1 to 40 are implemented.
